# EUROPÄISCHE PATENTSCHRIFT

(11) **EP 3 180 274 B1**
(45) Veröffentlichungstag und Bekanntmachung des Hinweises auf die Patenterteilung: **27.12.2017**
(21) Anmeldenummer: 15747822.3
(22) Anmeldetag: 10.08.2015
(51) Int. Cl.: B65G 1/04, B65G 1/06

(54) **LAGER- UND KOMMISSIONIERSYSTEM UND VERFAHREN ZUM OPTIMIERTEN EIN- UND AUSLAGERN VON ARTIKELN**
STORAGE AND PICKING SYSTEM, AND METHOD, FOR THE OPTIMIZED STORAGE AND RETRIEVAL OF ARTICLES
SYSTÈME DE STOCKAGE ET DE TRIAGE ET PROCÉDÉ DE STOCKAGE ET DE DÉSTOCKAGE D'ARTICLES DE MANIÈRE OPTIMISÉE

(30) Priorität: 11.08.2014 DE 102014111394
(43) Veröffentlichungstag der Anmeldung: 21.06.2017
(73) Patentinhaber: SSI Schäfer Automation GmbH, 97232 Giebelstadt (DE)
(72) Erfinder: ISSING, Elmar, 97232 Giebelstadt (DE)
(74) Vertreter: Witte, Weller & Partner Patentanwälte mbB
(86) Internationale Anmeldenummer: PCT/EP2015/068359
(87) Internationale Veröffentlichungsnummer: WO 2016/023861

(56) Entgegenhaltungen:
- EP-A1- 2 450 223
- EP-A2- 2 044 494
- JP-A- H0 672 512
- JP-A- 2003 285 906
- JP-A- 2004 123 240
- JP-A- 2010 120 758
- JP-A- 2011 102 166
- JP-U- S6 367 503
- US-A- 4 773 807

## Beschreibung

Die vorliegende Erfindung betrifft ein Lager- und Kommissioniersystem. Zum optimierten Ein- und Auslagern von Artikeln in und aus dem System werden insbesondere ein entsprechend eingerichteter Materialflussrechner sowie vorzugsweise ein fahrerloses Transportsystem (FTS) mit autonomen, fahrerlosen Transportfahrzeugen (FTF) eingesetzt. Eine klassische Vorzone, die durch Stetigförderer inkl. Sortern geprägt ist, wird durch eine Fördermittel-Ebene ersetzt. Die Erfindung kommt insbesondere bei "Case-Picking"-Szenarien zum Einsatz.

Sowohl beim "Case-Picking" als auch beim "Piece-Picking" werden Lagerbehältnissen auftragsorientiert aus einem Lager zu einem Kommissionier-Arbeitsplatz zwecks Artikelentnahme und -abgabe transportiert. Das Lager weist Regale auf, in denen die Artikel mit oder ohne Ladungsträger bevorratet sein können. Die Ein- und Auslagerung der Artikel erfolgt mittels Regalbediengeräten, deren Lastaufnahmemittel (LAM) üblicherweise horizontal und ggf. vertikal in Regalgassen beweglich sind, die zwischen den Regalen definiert sind. Die Regalbediengeräte werden über Vertikalförderer bzw. Lifte mit den Artikeln versorgt, die wiederum stirnseitig an den Regalen und Regalgassen angeordnet sind. Eine derartige Anordnung wird z.B. in dem Dokument US 7,261,509 B offenbart. Die Lifte fördern die Artikel vertikal zu einer Fördertechnik-Ebene, die sich ebenfalls stirnseitig an die Regale und Regalgassen anschließt. Diese Fördertechnik-Ebene wird auch als "Vorzone" bezeichnet.

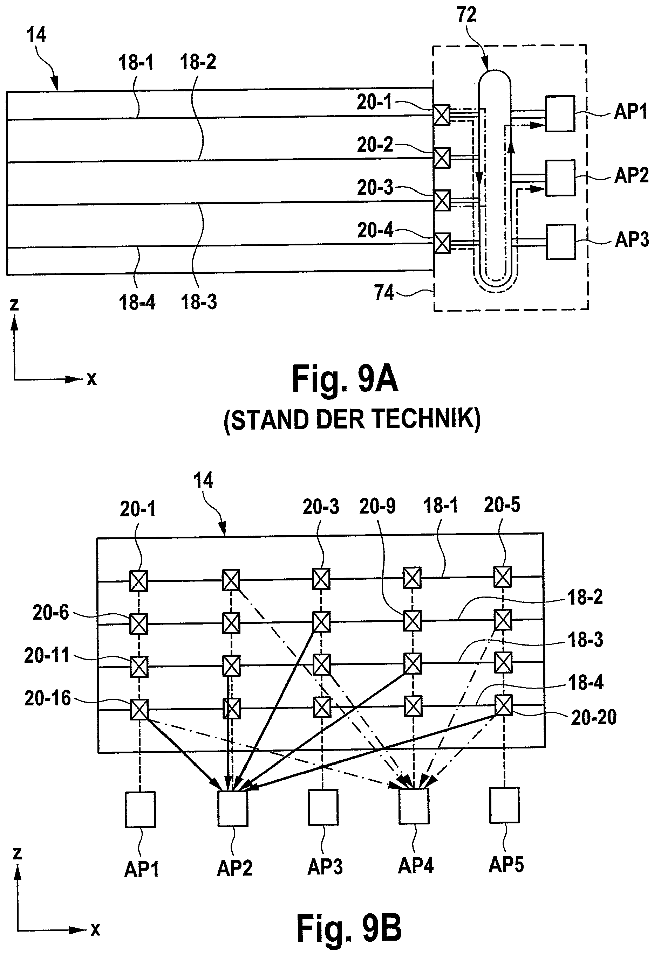

Die Vorzone weist üblicherweise eine Vielzahl von Fördertechnik-Stichstrecken auf, die als Pufferstrecken eingesetzt werden, um die jeweiligen Regalgassen fördertechnisch mit einem Sortierkreisel zu verbinden, der die ausgelagerten Artikel in eine gewünschte Reihenfolge bringt, d.h. die Artikel in der gewünschten Reihenfolge an eine oder mehrere Zielstellen (z.B. Kommissionierarbeitsplatz) abgibt (siehe auch Fig. 9A). Herkömmliche Systeme weisen immer einen Sortierkreisel auf, der materialflusstechnisch eine Engstelle darstellt.

Eine Vorzone mit Pufferstrecken zwischen einem zentral angeordneten Sortierkreisel und stirnseitig angeordneten Liften ist in dem Dokument US 2010/300048 A1 offenbart. Da die Pufferstrecken und der Sortierkreisel jeweils einen unveränderbaren Streckenverlauf aufweisen und da der Sortierkreisel eine begrenzte Aufnahme- und Sortierkapazität hat, ist es erforderlich, dass die Regalbediengeräte und die Lifte, die zwei separate Sequenzierungsstufen darstellen, die Artikel vorab (teil-)sequenzieren. Dies bedeutet, dass die Regalbediengeräte die Artikel in einer vorbestimmten Reihenfolge auslagern (erste Sequenzierungsstufe), die grob, aber nicht exakt, der gewünschten Reihenfolge entspricht. Wenn mehrere Regalbediengeräte übereinander betrieben werden, stellt eine (Regal-)Ebene, aus welcher die Lifte die von den Regalbediengeräten bereitgestellten Artikel abholen, um sie vertikal in Richtung der Vorzone zu transportieren, eine weitere, zweite Sequenzierungsstufe dar. In einer dritten Sequenzierungsstufe (Sortierkreisel) erfolgt die finale Sequenzierung in Form einer Abgabe an die Zielstelle(n). Ein Planungs- und Steueraufwand ist in diesem Fall also erheblich, um die Artikel in der gewünschten Reihenfolge zum Arbeitsplatz (Zielstelle) zu bringen. Die Planung muss in drei Stufen vorab erfolgen und beginnt bereits mit der Auswahl eines der Regalbediengeräte. Die Regalbediengeräte müssen dann sequenzbedingt mitunter sehr weite Wege innerhalb der Regalgassen zurücklegen, um einen durch die (Vor-)Sequenz vorgegebenen Artikel auszulagern und zu dem stirnseitigen Lift zu bringen.

Ein weiteres Problem stellt ein für die Systeme zur Verfügung stehende Raum dar. Die Vorzone ist dem Lager, und damit den Regalen, in der Regel stirnseitig vorgelagert. Die Vorzone ist üblicherweise (im Vergleich zum Regallager) relativ klein. Die in der Vorzone eingesetzten Stetigförderer (z.B. Rollenbahnen, Gurt- bzw. Bandförderer, Riemenförderer, Kettenförderer, etc.) haben einen festen und nicht - ohne weiteres - veränderbaren Streckenverlauf. Nach einer Inbetriebnahme der Anlage ist der Streckenverlauf, insbesondere in der Vorzone, eigentlich fest vorgegeben und unveränderbar. Die fördertechnischen Komponenten (Stichstrecken, Sortierkreisel, Weichen, etc.) der Vorzone sind gerade wegen des spärlichen Raums für Wartungsarbeiten oftmals schwer zugänglich. Das Dokument DE 101 36 354 A1 offenbart in seiner Fig. 1 einen relativ komplexen Streckenverlauf der Fördertechnik in der Vorzone, um zwei Arbeitsplätze über zwei separate Fördertechnikkreisläufe mit Lagerbehältern zu versorgen. In der Regel wird die Vorzone von einer weiteren Fördertechnik für Auftragsbehälter durchquert, so dass noch weniger Raum zur Verfügung steht.

Unter einem "Stetigförderer" (engl. Steady conveyor) ist ein Förderer zu verstehen, der Fördergut (Schütt- oder Stückgut) in einem stetigen Fluss von einer oder mehreren Aufgabestellen (Quellen) zu einer oder mehreren Abgabestellen (Zielen) transportiert. Beispiele für Stetigförderer sind: Gurtförderer, Rollenförderer, Kettenförderer und Kreisförderer. Typische Merkmale von Stetigförderern sind: kontinuierlicher/diskretkontinuierlicher Fördergutstrom, Zentralantrieb im Dauerbetrieb, Be- und Entladung im Betrieb, stets aufnahme-/abgabebereit, und ortsfeste Einrichtungen. Die kontinuierliche Arbeitsweise ermöglicht den Transport relativ großer Mengen in kurzer Zeit (im Vergleich zu Unstetigförderern).

Ein stirnseitiger Transfer der Artikel aus und in die Regale über die stirnseitig angeordneten Lifte stellt einen Durchsatzengpass dar. Unter einem Durchsatz wird nachfolgend eine Anzahl von Ein-/Auslagerungen pro Zeiteinheit bzw. eine Anzahl von Picks pro Zeiteinheit verstanden. In dem Dokument WO 2007/134840 A, welches auf die Patentanmelderin zurückgeht, wird ein Lager-Layout offenbart, das sich von der stirnseitigen Anordnung der Lifte abwendet. Die WO 2007/134840 A schlägt vor, jeweils mehrere Lifte seitlich an den Längsseiten der Regale zu positionieren, um den Durchsatz - im Vergleich zu stirnseitig angeordneten Liften - zu erhöhen. Diese Vielzahl von Liften ist aber wiederum an konventionelle Stetigförderer gekoppelt, die die ausgelagerten Artikel zu in der Regel weit entfernten (Kommissionier-)Arbeitsplätzen bringen. Durch den Einsatz von Stetigförderern in der Vorzone ist bei der WO 2007/134840 A weiterhin eine Vorsequenzierung mittels der Regalbediengeräte innerhalb des Lagers bzw. innerhalb der Regale erforderlich. Die Stetigförderer benötigen außerdem relativ viel Platz und erschweren somit u.a. eine räumliche Verdichtung des Lager-Layouts.

Einen ähnlichen Ansatz zeigt die EP 2 287 093 B1. Dort werden mehrere Vertikalförderer entlang einer Regalgasse platziert, die die zu transferierenden Artikel an eine Stetigförderer-Ebene abgeben. Eine Gruppe von benachbarten Vertikalförderern ist unveränderlich einer einzigen Zielstelle (Arbeitsplatz) zugeordnet, die über jeweils einen Sortierkreisel fördertechnisch mit den Vertikalförderern der Gruppe verbunden ist.

Ein anderer konzeptioneller Ansatz ist in dem Dokument EP 2 044 494 A1 beschrieben. Dort werden autarke Fahrzeuge (Shuttle) offenbart, die Kleinstregale innerhalb einer Aktionsfläche von einem Lagerbereich in einen Kommissionierbereich bewegen. Dies bedeutet, dass zu kommissionierende Artikel nicht aus den Regalen ausgelagert und mittels der Fahrzeuge zu Arbeitsplätzen transportiert werden, sondern dass die Fahrzeuge die Regale direkt an die Arbeitsplätze transportieren. Aber auch hier ist der Planungsaufwand erheblich. Die Sequenzierung ist erschwert, weil ganze Regale in der richtige Reihenfolge (und Orientierung) zum Arbeitsplatz gebracht werden müssen.

Es ist daher eine Aufgabe der vorliegenden Erfindung ein verbessertes Lager- und Kommissioniersystem vorzusehen, das flexibel auf Sequenzierungs- oder Artikelverteilungsanforderungen reagieren kann und dennoch eine optimale Leistung gewährleistet.
Das Dokument JP 2011 102166 A offenbart ein Kommissioniersystem mit autonomen, fahrlosen Fahrzeugen, wobei Transportrouten hinsichtlich Kosten optimiert werden.

Diese erste Aufgabe wird gelöst durch ein Lager- und Kommissioniersystem nach Anspruch 1. WO 2007/134840 A1 offenbart ein Lager- und Kommissionierssystem gemäß dem Oberbegriff des Anspruchs 1.

Die Substitution der klassisch in der Vorzone verwendeten Stetigförderer durch ein schachbrettartig aufgebautes Transportnetzwerk (Fördermittel-Ebene) sowie die Vergrößerung der Vorzone durch eine Verlagerung unter die, über die oder durch die Regalanordnung hindurch ermöglichen eine freie Zuordnung einer sehr großen Anzahl von Quellen (Vertikalförderern) zu Senken (Arbeitsplätzen). Jede Zielstelle kann von jeder Startstelle mit Artikeln versorgt werden, weil eine Vielzahl verschiedener Förderwege definierbar ist, aus denen dann später ausgewählt wird. Die Fahrwege können beliebig definiert werden, da sie aus einer nahezu unendlichen Vielzahl von Segmenten zusammensetzbar sind. Die Anzahl der möglichen Wege zwischen einer Quelle und einer Senke erhöht sich im Vergleich zu klassischen Stetigförderern erheblich, weil auf deren fixe und unveränderliche Streckenverläufe verzichtet wird.

Die Regalbediengeräte, die in den Regalgassen zum Ein- und Auslagern der Artikel eingesetzt werden, können chaotisch, d.h. ohne Sequenz, auslagern. Auf die üblicherweise mit den Regalbediengeräten verknüpfte Sequenzierungsstufe kann verzichtet werden. Die Regalbediengeräte können deshalb wegoptimiert auslagern, was in einer Erhöhung des Durchsatzes (Auslagerungen pro Zeiteinheit) resultiert. Der Materialflussrechner wird entlastet, weil ein mit den Regalbediengeräten verknüpfter Planungsaufwand hinsichtlich einer Sequenzierung entfällt. Das gleiche gilt in umgekehrter Richtung für die Einlagerung, nur dass anstatt einer Sequenzierung eine Artikelverteilung über das Lager verbessert wird.

Das System ist service- und wartungsfreundlicher, weil die Fördermittel-Ebene im Vergleich zur klassischen Fördertechnik in der oftmals sehr beengten Vorzone besser zugänglich ist. Außerdem gibt es keine Probleme hinsichtlich Fluchtwegen.

Die Fördermittel-Ebene kann mittels Kameras überwacht werden, so dass z.B. fehlerbehaftete bzw. stillstehende FTF leicht lokalisierbar sind. Die Fördermittel-Ebene wird kontinuierlich vom Flottenmanager überwacht. Die FTF selbst können mit Kameras versehen sein.

Die materialflusstechnische Verbindung (Streckenführung) zwischen den Vertikalförderern (Start/Zielstelle) und den Arbeitsplätzen (Ziel/Startstelle) kann jederzeit geändert werden, was eine neue Zuordnung der Vertikalförderer zu den Arbeitsplätzen jederzeit ermöglicht.

Die damit erzielte Vereinfachung des Materialflusses von den Vertikalförderern zu den Arbeitsplätzen ermöglicht es, mehr Arbeitsplätze bei gleichbleibender Gesamtfläche mit Artikeln zu versorgen. Außerdem kann auf beliebige Bereiche des Lagers zugegriffen werden.

Die Gesamtleistung des Systems wird gesteigert.

Vorzugsweise sind die Wegpunkte entlang eines regelmäßigen Rasters angeordnet.

Insbesondere ist der Materialflussrechner ferner eingerichtet, jedes der Segmente barrierefrei von einem der Wegpunkte zu einem anderen Wegpunkt zu definieren, der ein Nachbar zweiten bis x-ten Grades ist.

Der Materialflussrechner kann die Wege von den Start/Zielstellen zu den Ziel/Startstellen beliebig definieren bzw. zusammenbauen. Stauungen werden vermieden, weil Fahrwege nicht mehrfach genutzt werden müssen, weil jeder Artikel seinen eigenen Fahrweg konstruiert bekommt, wobei dennoch die Größen Sequenz und Artikelverteilung berücksichtigt werden. Auf Sortierkreisel kann vollständig verzichtet werden.

Dies äußert sich insbesondere darin, dass jeder der Vertikalförderer jeweils über mehrere verschiedene kurze Fahrwege an jede der Start/Zielstellen koppelbar ist.

Bei einer anderen Ausgestaltung stellt die Vielzahl der Regalplätze eine erste Regelstufe dar, wobei die Vielzahl der Regalbediengeräte eine zweite Regelstufe darstellt, wobei die Vielzahl der Vertikalförderer eine dritte Regelstufe darstellt, wobei die Vielzahl von möglichen Fahrwegen eine vierte Regelstufe darstellt und wobei die Vielzahl von Start/Zielstellen eine fünfte Regelstufe darstellt.

Auch bautechnische geteilte Lager bzw. Regalanordnungen können materialflusstechnisch problemlos miteinander verbunden werden. Anlagenerweiterungen in z.B. auch andere Gebäude sind möglich. Die Regelstufen erlauben eine gleichmäßige Verteilung der Lasten auf die unterschiedlichen Materialflusskomponenten.

Insbesondere stellt die Vielzahl der Transferplätze eine weitere Regelstufe dar.

Vorzugsweise stellen die Übergabeplätze eine noch weitere Regelstufe dar.

Weiter ist es von Vorteil, wenn der Materialflussrechner eingerichtet ist, die Regelstufen durch Gewichtung so aufeinander abzustimmen, dass eine Auslagerleistung bzw. eine Lagergutverteilung optimal ist.

Auf diese Weise lässt sich eine dynamische Sequenzverschiebung (Auslagerung) bzw. Verschiebung der Artikelverteilung (Einlagerung) erzielen.

Auch ist es von Vorteil, wenn der Materialflussrechner ferner eingerichtet ist, die Transportaufträge zumindest für die Regalbediengeräte wegoptimiert zu planen.

Die Regalbediengeräte arbeiten dann mit einer sehr hohen Leistung (Ein-/Auslagerungen pro Zeiteinheit), auf jeden Fall mit einer höheren als wenn sie zusätzlich sequenzieren müssen.

Insbesondere ist jeder der Transportaufträge durch folgende Lagergut-spezifische Parameter definiert: eine Auswahl eines der Regalplätze; eine Auswahl eines der Regalbediengeräte, das das entsprechende Lagergut in den ausgewählten Regalplatz ein- oder auslagert; eine Auswahl eines der Vertikalförderer; eine Auswahl einer Start/Zielstelle; und eine Auswahl eines der Fahrwege, die den ausgewählten Vertikalförderer über zusammenhängende Segmenten mit der ausgewählten Start/Zielstelle verbindet.

Optional stellen auch eine Auswahl eines der Transferplätze und eine Auswahl eines der Übergabeplätze Parameter der Transportaufträge dar.

Bei einer anderen vorteilhaften Ausgestaltung schließt die Grundfläche die Regale und die Regalgassen der Regalanordnung im Wesentlichen vollständig ein.

Die Vorzone wird unter, ins oder über das Regal bzw. die Regalanordnung verlagert und dadurch vergrößert.

Insbesondere weist die Fördermittel-Ebene eine Vielzahl von Fördertechnik-Modulen auf, die die Segmente als Strecken und die Wegpunkte als Kreuzungen oder Verzweigungen implementieren.

Die Fördermittel-Ebene kann also z.B. durch eine schachbrettartig aufgebaute Rollenfördererstruktur implementiert werden, wobei an Kreuzungen z.B. heb- und senkbare Riemenförderer eingesetzt werden, die zwischen den Rollen angehoben und gesenkt werden, um einen Querverkehr zu ermöglichen.

Vorzugsweise weist die Topologie ferner Ortsangaben zu den Vertikalförderern und zu anderen Fahrhindernissen in der Grundfläche auf.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystems;
- Fig. 2: ein FTF mit Aufsatz (Fig. 2A) und ein FTF ohne Aufsatz (Fig. 2B);
- Fig. 3: eine Materialflussrechnerarchitektur;
- Fig. 4: eine perspektivische Ansicht einer Fördermittel-Ebene unterhalb einer Regalanordnung;
- Fig. 5: eine Draufsicht auf einen Teil einer Fördermittel-Ebene;
- Fig. 6: ein Blockdiagramm in Draufsicht zur Verdeutlichung einer Zuordnung von Vertikalförderern zu Arbeitsplätzen;
- Fig. 7: eine Draufsicht (Fig. 7A) auf eine Fördermittel-Ebene zur Verdeutlichung möglicher Fahrwege, eine Draufsicht (Fig. 7B) auf eine Topologie zur Verdeutlichung möglicher Segmente und eine Draufsicht (Fig. 7C) auf eine Topologie zur Verdeutlichung von Nachbarschaftsgraden und möglichen Streckenverläufen;
- Fig. 8: ein Flussdiagramm;
- Fig. 9: einen systematischen Vergleich zwischen dem Stand der Technik (Fig. 9A) und der Erfindung (Fig. 9B); und
- Fig. 10: ein Blockdiagramm zur Verdeutlichung eines Regelmechanismus betreffend Sequenzierungsstufen (Auslagerung) und (Artikel-)Verteilungsstufen (Einlagerung).

Wenn im Nachfolgenden von vertikalen bzw. horizontalen Orientierungen gesprochen wird, versteht es sich von selbst, dass Elemente, die mit diesen Orientierungen verknüpft sind, jederzeit durch eine entsprechende Drehung miteinander vertauscht werden können, so dass derartige Orientierungen nicht einschränkend zu verstehen sind.

Wie in der (Intra-)Logistik üblich, werden in Lager- und Kommissioniersystemen (Distributionsanlagen, Materialhandhabungsanlagen, etc.) eine Längsrichtung mit "X", eine Querrichtung mit "Z" und eine Höhenrichtung mit "Y" bezeichnet. Die Richtungen X, Y und Z definieren vorzugsweise ein kartesisches Koordinatensystem.

Unter einer Lageranordnung bzw. einer Regalanordnung 14 wird nachfolgend eine Vielzahl von Regalen 16 verstanden, die meist parallel in Form von Einzelregalen oder Doppelregalen angeordnet sind. Doppelregale sind Einzelregale, die Rücken an Rücken aufgestellt sind. Die Regale 16 erstrecken sich im Wesentlichen längs. Regalgassen 18 sind quer zwischen den Regalen 16 definiert und dienen als Aktionsraum für Regalbediengeräte 22 und Artikeltransfers. Die Regale 16 enden an sich jeweils gegenüberliegenden (kurzen) Stirnseiten, die wiederum in einer Ebene senkrecht zur Längsrichtung bzw. zu den (langen) Längsseiten der Regale 16 und zu den Regalgassen 18 orientiert sind. Die Regale 16 selbst weisen eine Vielzahl von (Regal-)Lagerplätzen bzw. Stellplätzen R auf, die in übereinanderliegenden Regalebenen angeordnet sind. Eine Regalzeile erstreckt sich in der horizontalen Richtung innerhalb eines Lagers und weist üblicherweise viele Lager- bzw. Stellplätze R übereinander und nebeneinander auf.

Unter einem "Artikel" wird nachfolgend eine Lager- und/oder Kommissioniereinheit innerhalb eines Lager- und Kommissioniersystems 10 verstanden. Die Lagereinheit, die auch als Lagergut bezeichnet wird, kann ein Lagerladehilfsmittel sowie den Artikel selbst umfassen. Die Lagereinheit kann aber auch nur den Artikel umfassen, wenn man das Lagerladehilfsmittel weglässt. Als Lagerladehilfsmittel werden üblicherweise Ladehilfsmittel eingesetzt, wie z.B. Paletten, Gitterboxen, Container, Behälter, Kartons, Tablare, (Hänge-)Taschen und Ähnliches. Unter einem "Artikel" ist insbesondere ein Stückgut zu verstehen. Die Artikel sind durch einen Artikeltyp unterscheidbare (kleinste) Einheiten eines Artikelsortiments. Stückgüter sind individualisierte, unterscheidbare Artikel, die einzeln gehandhabt werden können und deren Bestand stückweise oder als Gebinde (Case) geführt wird. Ein "Gebinde" ist ein allgemeiner Begriff für eine handhabbare Ladeeinheit, die manuell oder mittels technischem Gerät (z.B. Fördertechnik, Regalbediengerät, Lastaufnahmemittel, etc.) bewegt werden kann. Auch eine Untermenge einer Ladeeinheit, z.B. ein Getränkekasten auf einer voll mit Getränkekästen beladenen Palette, wird als Gebinde bezeichnet. Die Begriffe "Artikel", "Gebinde", "Lagergut" und "Stückgut" werden nachfolgend gleichwertig verwendet.

Die Begriffe "Regalplatz", "Lagerplatz", "Stellplatz", "Palettenplatz" und "Speicherplatz" werden äquivalent benutzt. Mit diesen "Plätzen" sind Orte innerhalb des Systems 10 gemeint, wo die Artikel bevorratet werden. Ein "Regalplatz" ist ein Ort, wo die Artikel innerhalb einer Lagereinrichtung (auch langfristig) zum Zwecke einer Kommissionierung bereitgehalten werden. Ein "Transferplatz" ist üblicherweise ein Regalplatz, der benachbart zu einem Vertikalförderer angeordnet ist. Transferplätze können auf jeder Regalebene angeordnet sein. Der Transferplatz dient einer vorübergehenden Pufferung eines oder mehrerer Artikel und ist materialflusstechnisch mit dem entsprechenden Vertikalförderer verbunden, um den oder die Artikel mit dem Vertikalförderer auszutauschen. Der Transferplatz dient einer Entkopplung der Vertikalförderer von Regalbediengeräten. Die Vertikalförderer müssen für einen Artikeltransfer nicht auf die Regalbediengeräte warten und umgekehrt.

Bei der Erfindung können verschiedene Typen von Förderern zum Einsatz kommen (z.B. Rollenförderer, Gurtförderer, Kettenförderer, Hängeförderer, Riemenförderer, Bandförderer, etc.). Die Begriffe "Förderer" und "Fördertechnik" werden nachfolgend äquivalent benutzt. Eine Fördertechnik umfasst im Wesentlichen alle technischen und organisatorischen Einrichtungen (z.B. Antriebe, Sensoren, Weichen, Steuerungselemente, etc.) zum Bewegen oder Transportieren von Fördergütern (d.h. Artikeln) und zum Lenken von Materialströmen.

Des Weiteren arbeitet die vorliegende Erfindung im Wesentlichen nach dem Prinzip "Ware zum Mann". Bei dem "Ware-zum-Mann"-Prinzip werden die zu kommissionierenden Artikel zu einer Bedienperson hin transportiert, damit die Bedienperson, die nachfolgend auch als "Kommissionierer" bezeichnet werden wird, aus Gründen einer besseren Ergonomie möglichst wenig bis gar nicht laufen muss, um einen Kommissioniervorgang (auftragsorientiertes Greifen und Abgeben von Artikeln) durchzuführen. Die zu kommissionierenden Artikel werden mittels der Ladehilfsmittel innerhalb des Systems 10 transportiert, insbesondere von und zu Pick-Stationen (d.h. Kommissionierarbeitsplätzen) und Vertikalförderern 20.

Ein (Kommissionier-)"Auftrag" besteht aus einer oder mehreren Auftragspositionen, die auch als Auftragszeilen bezeichnet werden. Eine Auftragszeile gibt eine jeweilige Menge (Stückzahl) eines Artikeltyps an, den ein Kunde bestellt hat.

Ferner unterscheidet man beim Kommissionieren aufgrund der gewählten Strategie zwischen auftrags- und artikelbezogenem Kommissionieren, wobei das Zusammenstellen der Artikel selbst entweder seriell, also nacheinander, oder parallel, also gleichzeitig stattfinden kann. Beim auftragsbezogenen Kommissionieren wird ein Auftrag als Ganzes bearbeitet, d.h. alle Artikel des Auftrags werden seriell zusammengestellt. Auf welche Art und Weise kommissioniert wird, kann von vielen Faktoren abhängen. Ein Faktor, der sicherlich eine Rolle spielt, ist eine durchschnittliche Auftragsstruktur. Es macht einen Unterschied, ob verschiedene Artikel in kleinen Stückzahlen zu kommissionieren sind oder ob immer wieder gleiche Artikel in hohen Stückzahlen zu kommissionieren sind. Es kann also z.B. auf die sogenannte Zugriffshäufigkeit der zu kommissionierenden Artikel ankommen.

Eine "Batch" ist eine Zusammenfassung mehrerer Aufträge zu einem Verarbeitungslos. Eine "Batch" ist also eine Zusammenfassung von mehreren Aufträgen zu einer geordneten Menge oder Liste von Aufträgen. Im Batch-Betrieb werden Aufträge zunächst gesammelt und sortiert, um dann sequentiell in einem Schub, d.h. in einer "Batch", verarbeitet zu werden. Die vorliegende Erfindung kommt insbesondere im Bereich des Handels über das Internet (B2B, B2C, etc.) zum Einsatz.

Eine Koordinierung der Abarbeitung von Aufträgen übernimmt ein Auftragsabwicklungssystem, das meist in einer Kommissioniersteuerung integriert ist, die z.B. auch ein Warenwirtschaftssystem aufweisen kann. Die Kommissioniersteuerung kann ferner eine (Lager-)Platzverwaltung sowie eine Informationsanzeige integriert haben. Die Kommissioniersteuerung wird üblicherweise durch eine Datenverarbeitungsanlage realisiert, die vorzugsweise zur verzögerungsfreien Datenübertragung und Datenverarbeitung im Online-Betrieb arbeitet. Die Kommissioniersteuerung kann durch eine oder mehrere Steuereinheiten implementiert sein, die nachfolgend noch näher beschrieben werden.

Die Aufträge liegen üblicherweise als Datensätze vor. Ein Auftrag kann ein Kopffeld, ein Prioritätsfeld und/oder ein Artikelfeld aufweisen. Das Kopffeld kann u.a. Informationen zum Kunden, der eine Bestellung aufgegeben hat, (Kunden-)Adresse oder eine (Kunden-)Identifikationsnummer sowie eine Bestell-/Auftragsnummer aufweisen. Das Prioritätsfeld enthält Angaben darüber, ob es sich um einen normalen Auftrag oder einen Eilauftrag handelt. Ein Eilauftrag ist ein Auftrag mit hoher (Bearbeitungs-)Priorität, der üblicherweise vorrangig von normalen Aufträgen behandelt wird. Das Artikelfeld weist die Auftragszeilen auf. Jede Auftragszeile weist zumindest Angaben über eine Stückzahl eines bestellten Artikels und über einen Artikeltyp auf.

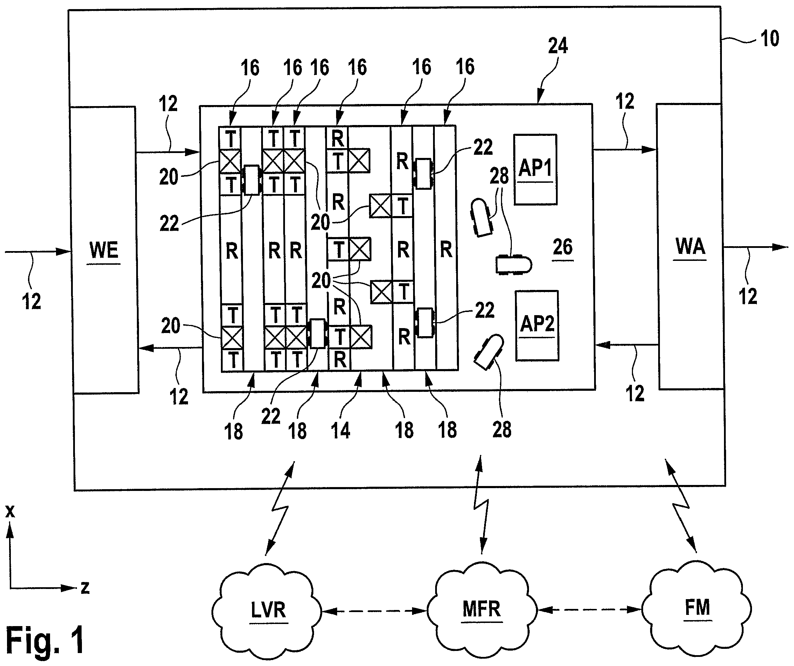

Fig. 1 zeigt ein Blockdiagramm eines Lager- und Kommissioniersystems 10, das z.B. als Distributionsanlage eines Einzelhändlers oder eines Online-Händlers verwendet werden kann. Das Lager- und Kommissioniersystem 10 wird nachfolgend auch kurz als "System 10" bezeichnet werden.

Das System 10 weist einen Wareneingang WE sowie einen Warenausgang WA auf. Ein Materialfluss 12 innerhalb und außerhalb des Systems 10 ist durch Pfeile verdeutlicht. Der Materialfluss 12 erfolgt innerhalb des Systems 10 vorzugsweise unter Einsatz von Regalbediengeräten 22, Vertikalförderern 20 und einem fahrerlosen Transportsystem (FTS). Gegenfalls wird auch konventionelle Fördertechnik eingesetzt.

Zwischen dem Wareneingang WE und dem Warenausgang WA der Fig. 1 ist eine statisch angeordnete Regalanordnung 14 mit mehreren Regalen 16 vorgesehen, die zwischen sich (Regal-)Gassen 18 definieren. Die Regale 16 erstrecken sich im Wesentlichen in der Längsrichtung X und sind in der Querrichtung Z zueinander beabstandet. Die Regale 14 sind stationär in Bezug auf eine Gesamtanordnung. Dennoch können die Regal 14 beweglich sein, wie z.B. in Form eines horizontal oder vertikal umlaufenden (Karussell-)Regals. Der Materialfluss 12 in der Höhenrichtung Y (senkrecht zur Zeichnungsebene) erfolgt innerhalb der Regalanordnung 14 im Wesentlichen mittels Vertikalförderern 20. Die Vertikalförderer 20 werden auch als Lifte bezeichnet. Dabei handelt es sich vorzugsweise um Stetigförderer, die den Materialfluss 12 ausschließlich in der vertikalen Richtung Y durchführen. Die Vertikalförderer 20 sind stationär, d.h. sie bewegen sich nicht relativ zu den Regalen 16. Die Vertikalförderer 20 können außerhalb und innerhalb der Regale 16 angeordnet sein. Bei einer Anordnung innerhalb der Regale 16 spricht man von Regal-integrierten Vertikalförderern 20. Eine entsprechende Regalanordnung 14 mit Regal-integrierten Vertikalförderern 20 ist exemplarisch in der WO 2012/113681 beschrieben, auf die diesbezüglich Bezug genommen wird. Derartige Regalintegrierte Vertikalförderer 20 sind in der Fig. 1, insbesondere in den ersten drei Regalen 16 von links gezeigt. Neben den Regal-integrierten Vertikalförderern 20 können ergänzend und/oder alternativ weitere Vertikalförderer 20 innerhalb der Regalgassen 18 vorgesehen sein. Eine derartige Anordnung ist exemplarisch in der WO 2007/134840 A1 beschrieben, auf die diesbezüglich Bezug genommen wird. In der Fig. 1 ist die zweite Regalgasse 18 von rechts sehr breit gewählt. Diese Regalgasse 18 kann in Z schmaler ausgelegt werden, so dass jeder der Vertikalförderer 20 an beide Regale 16 links und rechts angrenzt. Die Zwischenräume in X können mit Regalplätzen R aufgefüllt werden.

In der Regalanordnung 14 sind den Regalen 16 immer mehrere Vertikalförderer 20 zugeordnet, die entweder innerhalb der Regale 16 oder in den Regalgassen 18 über die Längsrichtung X verteilt, angeordnet sind. Die (materialflusstechnische) Zuordnung kann aber auch über eine Regalgasse 18 hinweg erfolgen, wie es exemplarisch für das Regal 16 der Fig. 1 gezeigt ist, das am weitesten rechts angeordnet ist. In und an dem am weitesten rechts angeordneten Regal 16 der Fig. 1 ist überhaupt kein Vertikalförderer 20 angeordnet. Die materialflusstechnische Anbindung erfolgt über das oder die Regalbediengeräte 22 an das links daneben angeordnete Regal 16. Bei den Regalbediengeräten 22 handelt es sich um Einebenen- oder Mehrebenenbediengeräte.

Die Regalbediengeräte 22 (nachfolgend auch "RBG" genannt) holen nicht näher bezeichnete und gezeigte Lagergüter bzw. Artikel aus den Regalplätzen R in den Regalen 16 ab, oder lagern sie in die Regalplätze R in den Regalen 16 ein. Zu diesem Zweck verfügen die RBG 22 über nicht näher bezeichnete und gezeigte Lastaufnahmemittel (nachfolgend auch "LAM" genannt), mit denen die Lagergüter bzw. Artikel zwecks Ein- und Auslagerung im Wesentlichen in der Z-Richtung bewegt werden. Die RBG 22 bewegen sich im Wesentlichen innerhalb der Regalgassen 18 und dienen dem Materialfluss 12 in der X-Richtung innerhalb der Regalanordnung 14. Wenn die RBG 22 über hier nicht näher gezeigte und bezeichnete Maste verfügen, decken die RBG 22 den Materialfluss 12 auch in der Höhenrichtung Y ab. Die Regale 16 können vertikal modular aufgebaut sein, wobei pro Modul mindestens ein RBG 22 vorgesehen ist. Die RBG 22 fahren in der Regel schienengeführt. Entsprechende Schienen sind nicht dargestellt.

Ohne Mast und ohne Hubfunktion bedienen die RBG 22 nur eine einzige Regalebene. Man spricht in diesem Fall von Einebenen-Regalbediengeräten, die auch als Shuttle (ohne Hubfunktion) bezeichnet werden. Alle RBG-Typen können verwendet werden.

Generell gilt, dass sich die RBG 22 vorzugsweise nur innerhalb der Regalanordnung 14 bewegen. Der Materialfluss 12 außerhalb der Regalanordnung 14, z.B. von und zu (Kommissionier-)Arbeitsplätzen AP, erfolgt im Wesentlichen mittels autonomen, fahrerlosen Transportfahrzeugen 28 (nachfolgend auch als "FTF" bezeichnet), die in der Intralogistik auch als "Shuttle" bezeichnet werden. Diese FTF bzw. Shuttle 28 bewegen sich außerhalb der Regalanordnung 14 in einer Fördermittel-Ebene 24, die eine Grund- bzw. Aktionsfläche 26 aufweist.

In der Fig. 1 sind exemplarisch zwei Arbeitsplätze AP1 und AP2 gezeigt. Die Arbeitsplätze AP sind vorzugsweise entlang der oder den Längsseiten der Regalanordnung 14 in der Fördermittel-Ebene 24 angeordnet, so dass der Materialfluss 12 zu den Arbeitsplätzen mittels der FTF 28 im Wesentlichen in der Querrichtung Z erfolgt. Es können mehr oder weniger Arbeitsplätze AP vorgesehen werden. Die Arbeitsplätze AP sind in der Fläche 26 angeordnet und über die FTF 28 materialflusstechnisch an die Regalanordnung 14 gekoppelt. Die Fördermittel-Ebene 24 kann, vorzugsweise in Form einer einzigen flachen, horizontalen Ebene unterhalb, oberhalb oder innerhalb der Regalanordnung 14 vorgesehen sein. Die Fördermittel-Ebene 24 ist materialflusstechnisch über die Vertikalförderer 20 mit den Regalen 16 verbunden.

Im Fall einer Kommissionierung an einem der Arbeitsplätze AP1 oder AP2 lagern die RBG 22 die entsprechenden Artikel auftragsorientiert aus den Regalplätzen R aus, transportieren die ausgelagerten Artikel im Wesentlichen horizontal zu Transferplätzen T, die gegenüberliegend zu den Vertikalförderern 20 innerhalb der Regale 16 anstatt von Regalplätzen R angeordnet sind und die zum Austauschen der Artikel mit den Vertikalförderern 20 eingerichtet sind. Die Vertikalförderer 20 holen die auf den Transferplätzen T, vorzugsweise doppeltief, gepufferten Artikel ab und transportieren sie in der vertikalen Richtung Y in die Fördermittel-Ebene 24. In der Fördermittel-Ebene 24 werden die von den Vertikalförderern 20 bereitgestellten Artikel an die FTF 28 abgegeben, die die abgegebenen Artikel wiederum zu den entsprechenden Zielstellen, nämlich z.B. den Arbeitsplätzen AP1 und/oder AP2 fahren. Entsprechende Fahrwege 40 (Routen im navigationstechnischen Sinne) werden auftrags- und sequenzorientiert von einem Flottenmanager FM (Steuerungssoftware inkl. entsprechender Hardware) bestimmt und individuell an die FTF 28 kommuniziert. Wenn die Fördermittel-Ebene 24 mit konventionellen Fördertechnik-Modulen (z.B. Rollenförderern) implementiert ist, entspricht der "Fahrweg" einer Förderstrecke mit einem ausgewählten Verlauf. ,Der Flottenmanager FM ist Teil eines übergeordneten Materialflussrechners MFR (Hard- und Software) sein, der wiederum Teil eines Lagerverwaltungsrechners (Hard- und Software) LVR sein kann. In der Fig. 1 sind diese Steuerungskomponenten FM, MFR und LVR als voneinander unabhängige, separate Komponenten gezeigt. Diese Komponenten können in einer Einheit vereint sein. Diese Komponenten können zentralisiert oder dezentral verteilt implementiert sein.

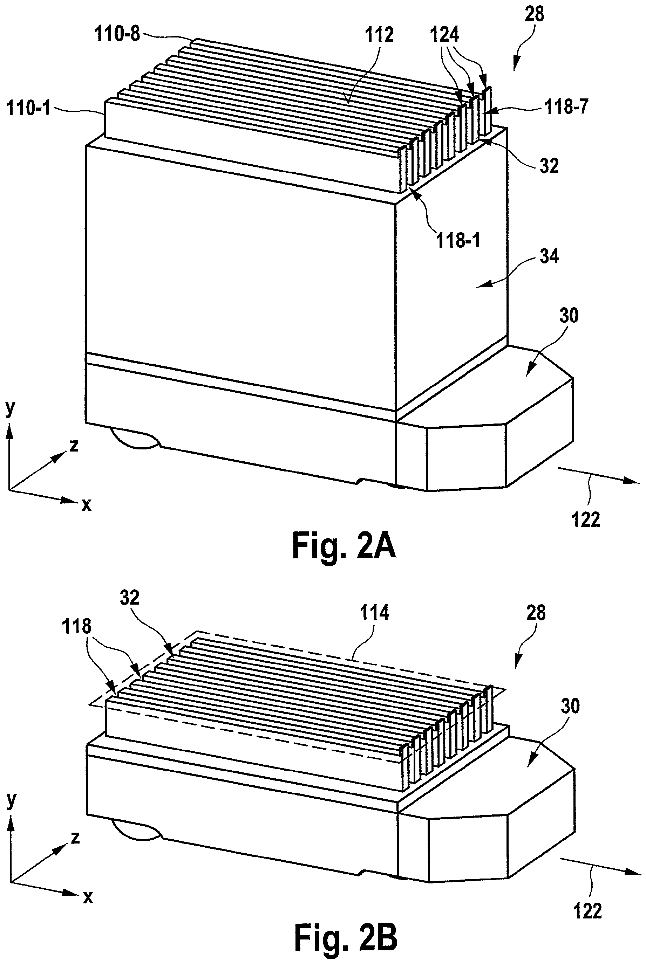

Die Figuren 2A und 2B zeigen perspektivische Ansichten einer ersten Ausführungsform eines FTF 28. Fig. 2A zeigt ein FTF 28, welches zum Arbeiten in Hüfthöhe eines Kommissioniers geeignet ist, indem zwischen einem eigentlichen Fahrzeug 30 und einer z.B. lamellenförmigen (Artikel-)Aufnahme 32 ein (Erhöhungs-)Aufsatz 34 vorgesehen ist, so dass sich eine Oberseite der Aufnahme 32 in einer Höhe von ca. 700 mm befindet. In der Fig. 2B ist das gleiche Fahrzeug 30 mit einer Artikelaufnahme 32, aber ohne Aufsatz 34 gezeigt.

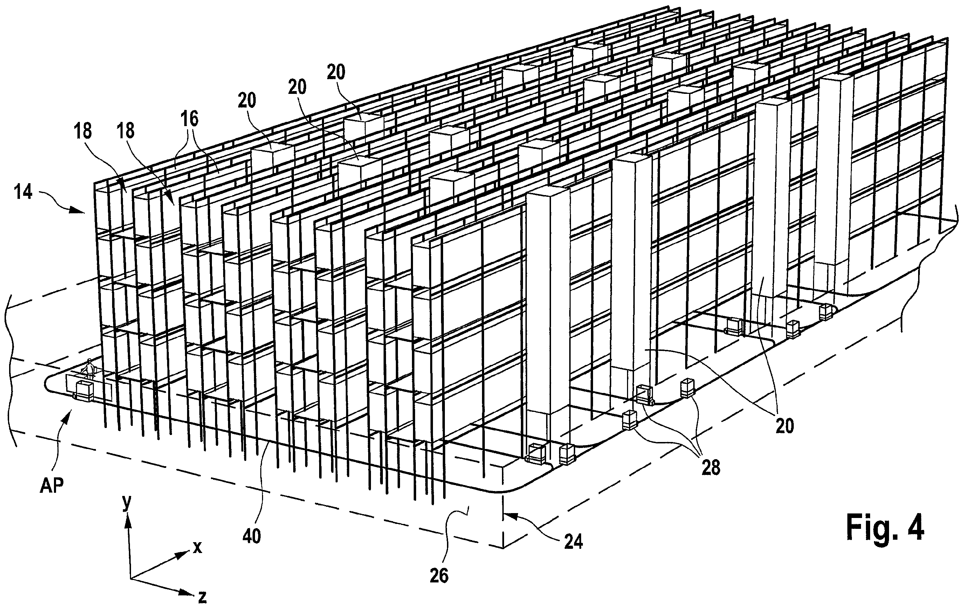

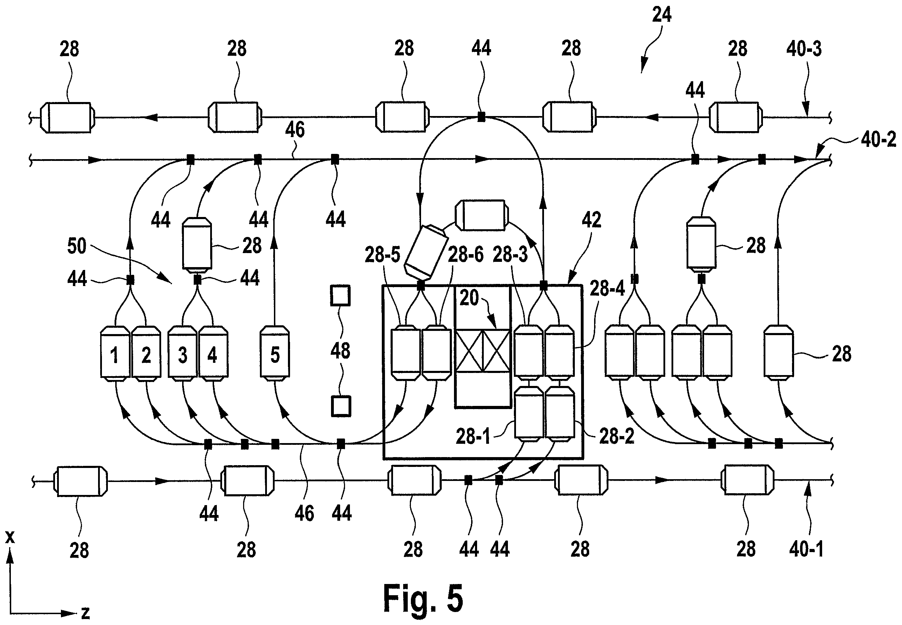

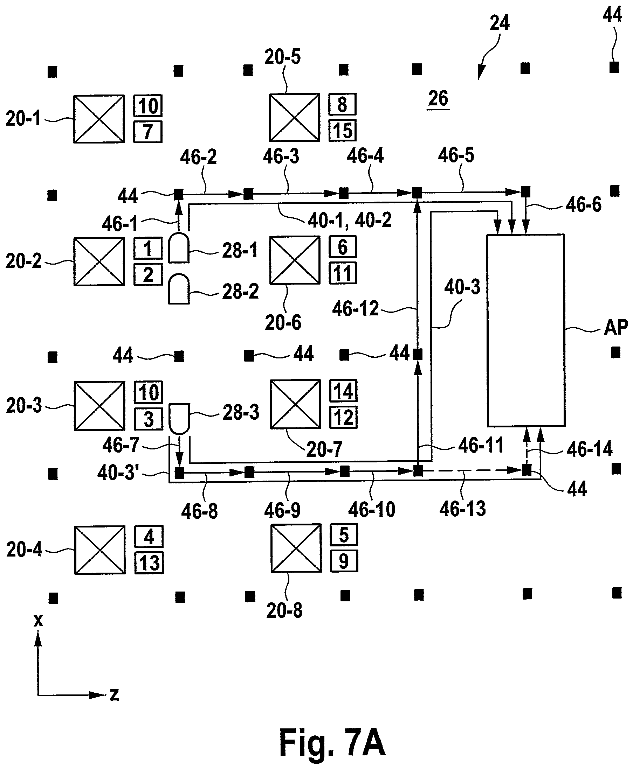

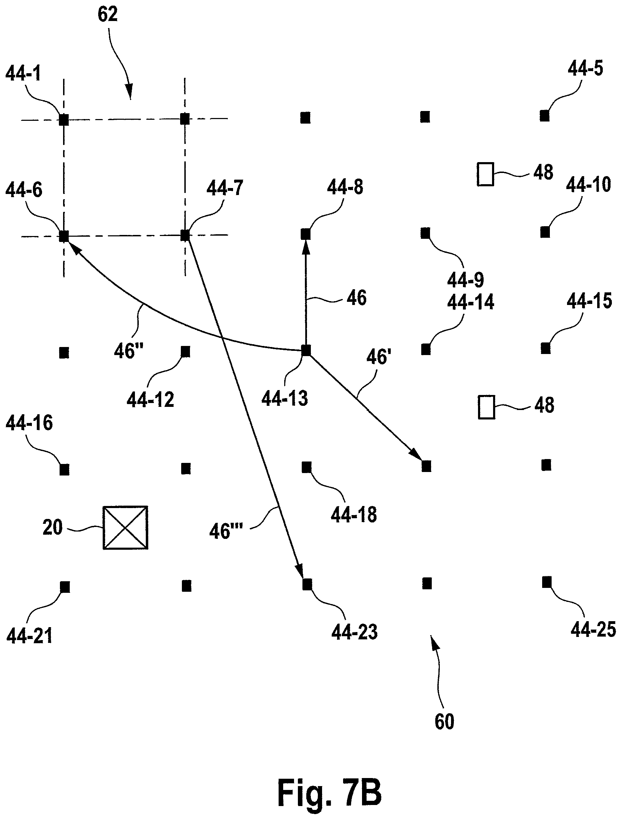

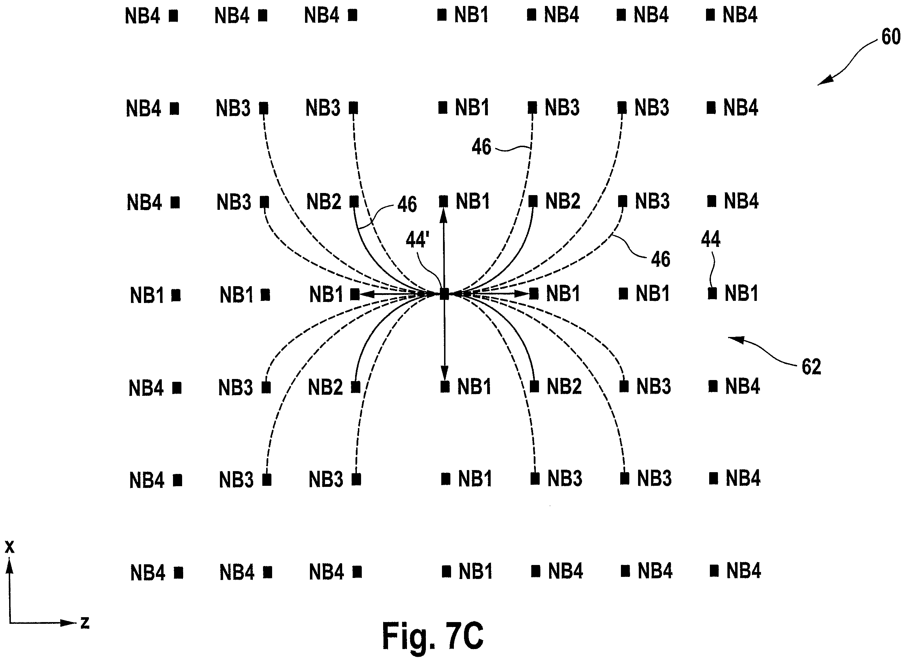

Generell handelt es sich bei den FTF 28 um automatisiert geführte Fahrzeuge, die Transportaufgaben in dem System 10 schnell, billig und skalierbar lösen. Die FTF 28 bewegen sich vorzugsweise entlang einem vordefinierten Transportnetzwerk, welches z.B. durch schwarze Linien ausgebildet ist, die auf einen Boden der Fläche 26 geklebt oder gemalt sind (siehe auch Fig. 4). Entlang dieses Transportnetzwerks können bspw. mehrere RFID-Marker als Implementierung von Wegpunkten 44 vorgesehen werden, die exemplarisch in Fig. 5 gezeigt sind. Eine Linie zwischen zwei benachbarten Wegpunkten 44 wird nachfolgend als Segment 46 bezeichnet. Es versteht sich die Segmente 46 auch in Form von virtuellen Verbindungslinien realisiert sein können, z.B. wenn ein internes GPS- oder Laser-Navigationssystem eingesetzt wird. Analoges gilt für die Wegpunkte 44. Die geometrische Abmessung der Fläche 26, die Wegpunkte 44 und die Segmente 46 definieren eine Topologie 60 der Fördermittel-Ebene 24. Diese Topologie 60, die unter Bezugnahme auf die Fig. 7 noch näher beschrieben werden wird, ist als "Karte" der Fördermittel-Ebene 24 ggf. einschließlich Orts- und Positionsbeschreibungen der Vertikalförderer 20, Regalsteher 46 und sonstiger (Fahr-)Hindernisse zu verstehen. Die Positionen der Vertikalförderer 20, der Regalsteher 46 und von Start/Zielstellen, eine Kontur der Segmente 46 sowie die Abmessungen der Fläche 26 sind bekannt. Eine Basisfläche der Regalanordnung 14 ist bekannt.

Die FTF 28 können Artikel puffern sowie von und zu vorgegebenen Stationen (z.B. den Arbeitsplätzen AP) hin transportieren oder von dort abholen. Eine Be- und Entladung der FTF 28 erfolgt vorzugsweise passiv. Dies bedeutet z.B., dass die FTF 28 keine Sensoren zum Identifizieren des Artikels oder zum aktiven Initiieren von Be- und Entladevorgängen aufweist. Eine passive Be- und Entladung z.B. unter Verwendung von Rampen ist in einer parallelen Patentanmeldung mit dem Titel "Lager- und Kommissioniersystem und Verfahren zum sequenzierten Bereitstellen von Artikeln" beschrieben, die am gleichen Tag wie die vorliegende Anmeldung von der Anmelderin eingereicht wurde und auf die diesbezüglich Bezug genommen wird.

Exemplarische FTF 28 sowie deren Komponenten und Steuerungsverfahren sind in der DE 10 2012 023 999 A1, DE 20 2013 010 696 U1 und DE 10 2012 006 738 A1 beschrieben, auf die hier Bezug genommen wird.

Eine Gruppe von zusammengehörigen FTF 28 in dem gemeinsamen Transportnetzwerk wird nachfolgend auch als Flotte bezeichnet. Eine Flottensteuerung (Erzeugen, Vergeben und Kontrollieren von FTF-Fahraufträgen) erfolgt durch den Flottenmanager FM. Die Flottensteuerung kann z.B. als separate Java-Anwendung ausgeführt sein, die über TCP (WiFi) mit den FTF 28 verbunden ist und die über ein anderes, vorzugsweise proprietäres, Kommunikationsprotokoll (LAN) mit dem Materialflussrechner MFR verbunden ist. Darauf wird später noch näher eingegangen werden.

Jedes der FTF 28 kann eine oder mehrere der nachfolgend genannten Komponenten aufweisen: eine Kamera, um den schwarzen Linien des Transportnetzwerks zu folgen; einen Abstandssensor zum Erfassen von Hindernissen oder anderen FTF 28 in der Umgebung; ein WiFi-Modul zum Kommunizieren mit dem Flottenmanager FM; einen austauschbaren (Energie-)Akkumulator; einen Mikrocomputer bzw. Mikrocontroller für eine lokale Fahrzeugsteuerung; ein Speicher-Modul zum Hinterlegen von Informationen z.B. zur Topologie und von Fahraufträgen; und/oder ein RFID-Lesegerät zum Erfassen der Wegpunkte 44. Die Wegpunkte 44 können auch als QR-Codes realisiert sein. Die Energieversorgung kann alternativ über PowerCaps erfolgen, die an Austauschstationen ausgetauscht werden können, wobei zusätzlich auch induktive Ladestationen eingesetzt werden können.

Jedes der FTF 28 ist eingerichtet, den schwarzen Linien zu folgen und einen minimal erforderlichen Abstand zu anderen, insbesondere vorausfahrenden, FTF 28 einzuhalten. Während eines Betriebs empfangen die FTF 28 jeweils eine Liste von Segmenten 46 vom Flottenmanager FM, die nacheinander passiert werden müssen und die einen oder mehrere FTF-spezifische Fahraufträge bzw. Fahrwege definieren. Für jedes der FTF 28 wird ein individueller Fahrweg bzw. eine Route durch den Flottenmanager FM berechnet. Jedes der FTF 28 hat Kenntnis von der Topologie des Transportnetzwerks, z.B. um von einem Wegpunkt 44 zu einem benachbarten Wegpunkt 44 gemäß spezifisch ausgewählten Segmenten 46 zu fahren, oder um eine Fahrzeit zu berechnen, oder an vorbestimmten Positionen anzuhalten. Zu diesem Zweck wird die Topologie des Transportnetzwerks vom Flottenmanager FM an die FTF 28 vorzugsweise während eines Systemstarts übermittelt.

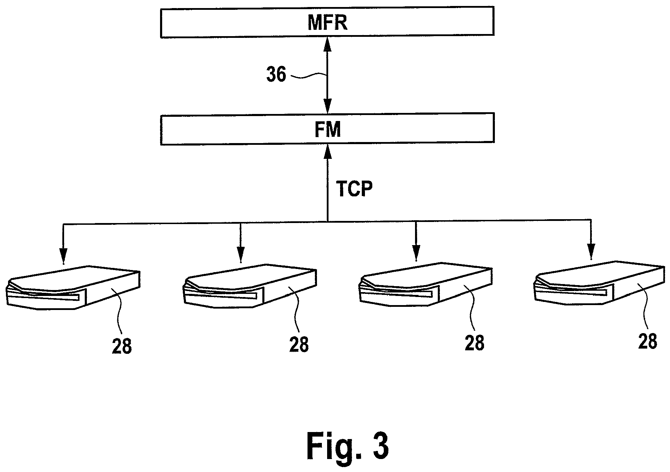

Fig. 3 zeigt allgemein eine Architektur der FTF 28 und deren Steuerung. Der Materialflussrechner MFR ist ein gewöhnliches Steuersystem, um Transporte in einem Lager unter Verwendung unterschiedlicher Hardware-Systeme zu organisieren. Der Materialflussrechner MFR kommuniziert über ein (vorzugsweise proprietäres) Kommunikationsprotokoll 36 mit dem Flottenmanager FM. Jedes der FTF 28 wird einem Flottenmanager FM zugewiesen, wobei jedes Transportnetzwerk vorzugsweise von einem eigenen Flottenmanager FM gesteuert wird. Es versteht sich, dass mehrere Flottenmanager FM parallel in einem System 10 betrieben werden können. Dann gibt es aber auch mehrere Flotten von FTF 28.

Der Flottenmanager FM repräsentiert allgemein ein Steuerungsmodul für alle FTF 28 im Transportnetzwerk. Der FM ist auch für eine Ausführung und Bestätigung von Transportaufträgen bzw. FTF-spezifischen Fahraufträgen im Transportnetzwerk verantwortlich. Die Transportaufträge erhält der FM vom MFR. Nach Erhalt der Transportaufträge wählt der FM geeignete FTF 28 aus, berechnet Fahrwege bzw. Routen und sendet die entsprechenden Listen der benötigten Segmente 46 als FTF-Fahraufträge an die ausgewählten FTF 28. Herstellerseitig sind die FTF 28 nicht mit Informationen zu einem Projekt-spezifischen Lager-Layout (Regalanordnung 14) versehen. Die erforderliche Information zur Topologie des Transportnetzwerks wird vom FM an jedes der FTF 28 z.B. während einer Konfigurationsphase übertragen. FTF-Fahraufträge und FTF-Konfigurationen werden z.B. über die TCP-Verbindung übertragen.

Eine Integration eines der FTF 28 in eine Flottensteuerung stellt einen separaten Vorgang dar. Zu diesem Zweck werden alle relevanten FTF-Parameter definiert. Entsprechende Dateien werden automatisch gelesen, wenn der FM gestartet wird. Des Weiteren werden Projekt-spezifische Netzwerkparameter an die FTF 28 übertragen. Diese Datei enthält eine Liste aller eingesetzter FTF 28 und definiert alle erforderlichen Parameter für jedes der FTF 28. Die nachfolgenden Daten können in den entsprechenden Dateien enthalten sein: eine herstellerseitig vorgesehene eindeutige Seriennummer des jeweiligen FTF 28; eine Nummer der Flotte; eine Nummer des jeweiligen FTF 28 innerhalb der Flotte; einen Heimatpunkt, z.B. ein (RFID-)Code eines Wegpunkts 44; einen Ladepunkt zum Aufladen einer Batterie der FTF 28; die IP-Netzwerkadresse des FM; ein Ladezustand; ein Störungszustand; einen Stand eines Kilometer- oder Betriebsstundenzählers; oder andere Parameter, die zur Kommunikation innerhalb des Netzwerks und zur Navigation innerhalb des Transportnetzwerks erforderlich sind.

Das Transportnetzwerk weist die Wegpunkte 44 sowie die Segmente 46 auf, die zwei Wegpunkte 44, vorzugsweise unidirektional, miteinander verbinden. Für jeden der Wegpunkte 44 ist ein eigener ID-Code vergeben. Physisch entspricht jedes der Segmente 46 einer schwarzen Linie, die gerade oder gekrümmt ausgebildet sein kann, auf dem Boden der Fläche 26 (siehe Fig. 4 und 5). Die Topologie des Transportnetzwerks, d.h. die Anordnung und die Orte der Wegepunkte 44 und der Segmente 46 dazwischen, sind dem FM und den FTF 28 bekannt. Jedoch benötigen beide Komponenten unterschiedliche Dateiinformationen. Der FM benötigt z.B. lediglich eine logische Topologie des Transportnetzwerks, wohingegen die FTF 28 eine exakte Länge jedes Segments wissen sollten, um z.B. korrekt bei einem Ziel-Wegpunkt 44 anhalten zu können, indem die Fahrzeit und eine Wegstrecke zum Bremsen vorab berechnet werden.

Nachfolgend wird eine Schnittstelle zwischen dem FM und den FTF 28, insbesondere die Kommunikation zwischen ihnen, beschrieben.

Nach einem Start oder Neustart aktiviert jedes der FTF 28 eine Weg- und Abstandsteuerung. Falls ein Weg (schwarze Linie) nicht erfassbar ist, hält das FTF 28 an, ohne sich zu bewegen. Anderenfalls folgt es der Linie bis ein erster Wegpunkt 44 (z.B. RFID-Marker) erreicht ist. Falls weitere FTF 28 oder sonstige Hindernisse auf dem Weg erfasst werden, muss das betroffene FTF 28 warten. Danach sendet das FTF eine Konfigurationsanfrage an den FM, die eine Seriennummer des FTF 28 und den RFID-Code des aktuellen Wegpunkts 44 enthält. Diese Anfrage wird solange (periodisch) wiederholt, bis der FM eine geeignete Konfiguration an das anfragende FTF 28 überträgt. Die Konfigurationsantwort des FM beinhaltet die Topologie des gesamten Transportnetzwerks sowie andere Projekt-spezifische Parameter, wie z.B. eine FTF-ID und eine Flotten-ID. Das FTF 28 speichert alle Informationen und ist dann für FTF-Fahraufträge vom FM bereit.

Um eines der FTF 28 durch das Transportnetzwerk zu bewegen, sendet der FM einen FTF-Fahrauftrag an das FTF 28. Der FTF-Fahrauftrag enthält eine Auftrags-ID, die ursprünglich vom MFR kommt, sowie eine Liste der Segmente 46. Des Weiteren können optionale Parameter enthalten sein, um z.B. eine maximale Geschwindigkeit und Beschleunigung des FTF 28 festzulegen. Die Segmente 46 werden an eine aktuelle interne Route des betroffenen FTF 28 angehängt, die leer sein kann. Dies bedeutet, dass der FM die interne Route des FTF 28 erweitert. Solange eine aktuelle interne Route des FTF 28 nicht leer ist, setzt das FTF 28 seine Fahrt fort. Jedes Mal, wenn ein Wegpunkt 44 passiert wird, d.h. ein entsprechender RFID-Marker erfasst wird, entfernt das FTF 28 das erste Segment der internen Route und sendet eine FTF-Statusmeldung an den FM, die die verbleibende Route und den entsprechenden RFID-Code des letzten Wegpunkts 44 enthält. Wenn das FTF 28 das letzte Segment 46 der internen Route erreicht, verringert es automatisch seine Geschwindigkeit und hält exakt am entsprechenden Wegpunkt 44 an. Die resultierende FTF-Statusmeldung enthält dann eine leere Restroute. Der FM sendet üblicherweise immer dann einen neuen FTF-Fahrauftrag, wenn die interne Restroute nur noch maximal drei abzufahrende Segmente 46 enthält.

Nachfolgend wird eine Schnittstelle zwischen dem FM und dem MFR beschrieben. Es wird also beschrieben, wie die Kommunikation zwischen dem FM und dem MFR abläuft. Üblicherweise erfolgt diese Kommunikation über ein (proprietäres) Kommunikationsprotokoll. Zu beachten ist, dass ein FM auch mit mehreren MFR kommunizieren kann, falls es erforderlich ist.

Üblicherweise hat der MFR keine Kenntnis von der Anzahl, dem Typ oder speziellen Eigenschaften der verschiedenen FTF 28 in der Flotte. Der MFR kommuniziert lediglich mit dem FM, um eines der FTF 28 zu einem gewünschten Wegpunkt 44 zu lenken bzw. zu navigieren. Dazu muss der MFR den RFID-Code von allen relevanten Wegpunkten 44 kennen. Üblicherweise sind alle Wegpunkte 44 mit einer Beladestation oder Entladestation für die FTF 28 verknüpft, auf die nachfolgend noch näher eingegangen werden wird.

Wenn der FM einen Transportauftrag vom MFR empfängt, wählt der FM automatisch ein geeignetes FTF 28 aus. Falls das FTF 28 den Ziel-Wegpunkt 44 erreicht, sendet der FM eine entsprechende Mitteilung, dass der Transportauftrag erledigt ist, an den MFR.

Insbesondere definiert jeder Transportauftrag eine Auftrags-ID. Die Auftrags-ID wird zum Verfolgen benutzt. Die Auftrags-ID wird an das FTF 28 gesendet. Die Auftrags-ID kann aber auch verwendet werden, um eine vorherige Bewegung mit dem gleichen FTF 28 fortzusetzen, um z.B. eine Auto-Auswahl des FTF 28 durch den FM zu verhindern.

Falls der FM einen neuen Transportauftrag erhält, prüft der FM zuerst, ob es ein FTF 28 gibt, welches mit dieser Auftrags-ID verknüpft ist. Falls ja, verwendet der FM vorzugsweise dieses vorausgewählte FTF 28, um den Auftrag auszuführen. Um diese Funktion ausführen zu können, haben die FTF 28 Kenntnis von den Auftrags-IDs.

Exemplarische Transportaufträge sind: Beladeauftrag; Entladeauftrag; und/oder Fahrauftrag.

Der FM ist auch zur Vermeidung von Kollisionen an Kreuzungspunkten (Wegpunkten 44) verantwortlich.

Fig. 4 zeigt eine perspektivische Ansicht einer Ausführungsform des Systems 10, bei welcher die Fördermittel-Ebene 24 unterhalb der Regale 16 der Regalanordnung 14 angeordnet ist und sich über eine Grundfläche der Regalanordnung 14 hinaus erstreckt. Die Vertikalförderer 20 sind seitlich relativ zu den Regalen 16 in Regalgassen 18 angeordnet. Jedes der Regale 16 ist materialflusstechnisch an mehrere der Vertikalförderer 20 gekoppelt. In der Fig. 4 sind jeweils vier nicht näher bezeichnete Regalmodule übereinander angeordnet. Jedes der Regalmodule wird von mindestens einem (nicht dargestellten) RBG 22 innerhalb der entsprechenden Regalgassen 18 bedient. In den Regalgassen 18, wo die Vertikalförderer 20 angeordnet sind, fahren keine RBG 22. Vertikal orientierte Regalsteher (Pfosten) der Regale 16 reichen in die (dreidimensionale) Fördermittel-Ebene 24 hinein und stellen in diesem Sinne Hindernisse für die FTF 28 dar, die auf der Fahrfläche 26 entlang von Fahrwegen 40 (schwarze Linien) verfahrbar sind. Es versteht sich, dass die FTF 28 auch auf eine andere Weise automatisiert geführt werden können, wie z.B. mittels eines lokalen GPS-Systems, welches ohne die schwarzen Linien auskommt, mittels Induktionsschleifen oder mittels einer Gleitsteinführung in Nuten, die im Boden der Fläche 26 vorgesehen sind und die Fahrwege 40 bzw. die Segmente 46 definieren.

Ferner ist in der Fig. 4 in der Fördermittel-Ebene 24 exemplarisch ein Arbeitsplatz AP gezeigt, der materialflusstechnisch über die FTF 28 an die Regale 16 angebunden ist. Die FTF 28 können sich frei unterhalb der Regale 16 entlang der Fahrwege 40 bewegen. Die Fördermittel-Ebene 24 ist, mit Ausnahme der Regalsteher und den Gestellen der Vertikalförderer 20, barrierefrei, insbesondere frei von Regalplätzen R. Die Fahrwege 40 werden so gewählt, dass die FTF 28 nicht mit den Regalstehern oder den (Maschinen-)Gestellen der Vertikalförderer 20 kollidieren. Unter dem Begriff "im Wesentlichen barrierefrei" wird nachfolgend verstanden, dass die Grundfläche 26, zumindest im Bereich der Regalanordnung 14, keine Hindernisse aufweist, die eine Konfiguration von möglichen Fahrwegen 40 einschränkt. Es versteht sich, dass zumindest die Vertikalförderer 20 Hindernisse im oben genannten Sinne darstellen. Diese sind aber nicht beachtlich, insbesondere weil als Quellen und Senken des Materialflusses Start- bzw. Zielpunkte der Fahrwege 40 darstellen. Auch kann es sein, dass vereinzelt Teile der Regale 16 in die Fördermittel-Ebene 24 reichen, wie z.B. die Regalsteher 48 oder einzelne Regalplätze R. Die Existenz eines einzelnen oder einiger weniger Regalplätze R in der Ebene 24 kann ebenfalls als barrierefrei angesehen werden, so lange die Anzahl der Möglichkeiten, Fahrwege 40 zu definieren, nicht signifikant beeinträchtigt wird, wie es z.B. der Fall wäre, wenn auch die Regalzeilen in die Ebene 24 reichen würden, denen die Fahrwege 40 dann "ausweichen" müssten. Außerhalb eines Bereichs, in dem sich die Grundfläche 26 und die Regalanordnung 14 (in der Projektion) nicht überdecken, dürfen mitunter Hindernisse in der Ebene 24 vorhanden sein, wie z.B. die Arbeitsplätze AP, die wiederum Strt- bzw. Zielpunkte der Fahrwege 40 darstellen.

Fig. 5 zeigt eine Draufsicht auf einen Ausschnitt einer Fördermittel-Ebene 24. Eine Liftanordnung 42 ist in der Fig. 5 zentral angeordnet und weist einen Vertikalförderer 20 mit zwei Plätzen auf, die in Z direkt nebeneinander angeordnet sind. So ist eine doppeltiefe Handhabung möglich. Ferner sind drei Fahrwege 40-1 bis 40-3 gezeigt, die sich im Wesentlichen horizontal in der Fig. 5 entlang der Längsrichtung X erstrecken und die sich jeweils aus einer Vielzahl von Segmenten 46 zusammensetzen. Transport- bzw. Fahrrichtungen der FTF 28 sind durch kleine schwarze Dreiecke angedeutet. Unten in der Fig. 5 verläuft ein erster Fahrweg 40-1 von links nach rechts, um die FTF 28 vom Wareneingang WE (siehe Fig. 1) zwecks Einlagerung von Artikeln in Richtung des Vertikalförderers 20 zu leiten. Parallel versetzt dazu ist darüber ein zweiter Fahrweg 40-2 gezeigt, der die FTF 28 von links nach rechts zu den Arbeitsplätzen AP leitet, z.B. zwecks Kommissionierung. Parallel dazu ist darüber ein weiterer Fahrweg 40-3 gezeigt, wo sich die FTF 28 von rechts nach links bewegen, um von den Arbeitsplätzen AP zum Warenausgang WA zu gelangen. Ferner sind die Wegpunkte 44 exemplarisch in Form kleiner schwarzer Quadrate (QR-Code, RFID-Code, Barcode, etc.) gezeigt.. Regalsteher 48 sind mit größeren schwarzen Quadraten angedeutet. Die Fahrwege 40 sind so gelegt, dass die FTF 28 nicht mit den Regalstehern 48 kollidieren.

Nachfolgend wird die Liftanordnung 42 der Fig. 5 näher betrachtet werden. Die beiden Plätze des Vertikalförderers liegen in der Richtung Z direkt nebeneinander. Das nicht näher gezeigte und bezeichnete LAM des Vertikalförderers ist dazu eingerichtet, Artikel aktiv mit den FTF 28 auszutauschen. Dazu kann der Vertikalförderer 20 z.B. in Z teleskopierbare Zinken, die mit den Aufsätzen 34 (vgl. Fig. 2) z.B. kämmen, oder seitliche Greifer aufweisen, um die Artikel doppeltief auszuheben oder abzusetzen. Das LAM des Vertikalförderers 20 kann auch zur Einfach- oder Mehrfachtiefenhandhabung der Artikel eingerichtet sein. Das LAM des Vertikalförderers 20 kann ferner über Stetigförderer verfügen, um Artikel zwischen sich und den FTF 28 zu bewegen.

Die Liftanordnung 42 umfasst einen räumlichen Bereich, in welchem Artikel zwischen den FTF 28 und dem Vertikalförderer 20 ausgetauscht werden. Rechts neben dem Vertikalförderer 20 erstrecken sich zwei Segmente 46, die im unmittelbaren Bereich des Vertikalförderers 20 parallel angeordnet sind und sich im Wesentlichen in der Querrichtung Z erstrecken. Links neben dem Vertikalförderer 20 erstrecken sich ebenfalls zwei Segmente 46, die sich im unmittelbaren Bereich der Vertikalförderer 20-1 und 20-2 wiederum parallel in der Querrichtung Z erstrecken. In der Fig. 5 sind rechts neben dem Vertikalförderer 20 vier FTF 28-1 bis 28-4 gezeigt, die Artikel zwecks Einlagerung zum Vertikalförderer 20 hin transportieren. Die FTF 28-5 und 28-6 dienen einer Auslagerung von Artikeln aus der darüber angeordneten Regalanordnung 14, die mit dem Vertikalförderer 20 auf das Niveau der Fördermittel-Ebene 24 verbracht werden. Die FTF 28-5 und 28-6 fahren über den zweiten Fahrweg 40-2 zu einem durch einen (Kommissionier-)Auftrag vorbestimmten Arbeitsplatz AP, der in diesem Fall der Zielstelle entspricht. Auf ihrem Weg dorthin können die FTF 28-5 und 28-6 eine Sequenzierungsharfe 50 passieren.

Die Sequenzierungsharfe 50 ist in der Fig. 5 links von der Liftanordnung 42 vorgesehen und umfasst exemplarisch fünf Fahrwege 40, die sich anfänglich parallel zueinander erstrecken, um hinsichtlich einer Sequenz chaotisch ausgelagerte Artikel in eine definierte Reihenfolge zu bringen, die z.B. durch einen Kommissionierauftrag vorgegeben ist. Im Beispiel der Fig. 5 sind die Artikel aufsteigend von links nach rechts in der Reihenfolge "1-5" zu sortieren. Unabhängig davon, in welcher Reihenfolge die Artikel von den Vertikalförderern 20-1 bis 20-2 in die Fördermittel-Ebene 24 gebracht werden, können die Artikel mittels der Sequenzierungsharfe 50 in die vorgegebene Reihenfolge gebracht werden. Die entsprechenden FTF 28 werden, sobald sie in der definierten Reihenfolge innerhalb der Sequenzierungsharfe 50 angekommen sind, über den Fahrweg 40-2 in Richtung des Arbeitsplatzes AP abgezogen. Am Arbeitsplatz AP angekommen, der in der Fig. 5 nicht gezeigt ist, können die Artikel in der vordefinierten Reihenfolge entnommen werden. Die FTF 28 sind dann vorzugsweise wieder leer und können entweder fertig kommissionierte Aufträge über den dritten Fahrweg 40-3 zum Warenausgang WA transportieren oder von dort zu den Liftanordnungen 42 zurückgeleitet werden, um weitere Artikel von den Vertikalförderern 20 abzuholen. Die leeren FTF 28 können auch in den WE fahren, um einzulagernde Artikel zu den Vertikalförderern 20 zu transportieren.

Ähnliches gilt für die FTF 28, die Artikel zur Einlagerung bereitgestellt haben. Sobald die Vertikalförderer 20 die Artikel übernommen haben, können die entsprechend geleerten FTF 28 entweder Fahraufträge annehmen, um aus der Regalanordnung 14 ausgelagerte Artikel zu den Arbeitsplätzen AP zu bringen, oder um zum Warenausgang WA zu fahren, der wiederum mit dem Wareneingang verbunden ist, um dort erneut zwecks Einlagerung beladen zu werden.

Die Sequenzierung, d.h. die Anordnung der Artikel gemäß einer gewünschten Reihenfolge, erfolgt endgültig in der Fördermittel-Ebene 24, indem der Flottenmanager FM die FTF-Fahraufträge entsprechend berechnet, koordiniert und ausgibt. Eine Sequenzbildung im Bereich der Regalanordnung 14, die üblicherweise durch die RBG 22 beim Auslagern der Artikel aus den Regalplätzen R und/oder beim Einlagern der ausgelagerten Artikel in die Transferplätze T erfolgt, ist nicht erforderlich. Die RBG 22 (siehe Fig. 1) holen die Artikel, die zu einem Auftrag gehören, wegoptimiert ab. Wegoptimiert bedeutet, dass die Artikel ohne Berücksichtigung irgendeiner Sequenz von den RBG 22 abgeholt werden. Die abgeholten Artikel können den Vertikalförderern 20 unsequenziert, d.h. noch nicht in der gewünschten aufsteigenden oder absteigenden (absoluten) Reihenfolge, an den Transferplätzen T (Pufferplätze im Regal 16) bereitgestellt werden, wobei hier eine Vorsequenzierung erfolgen kann, insbesondere wenn die Artikel mehrfachtief gehandhabt werden. Die absolute Reihenfolge, in welcher die zu einem einzelnen Kommissionierauftrag gehörenden Artikel, z.B. gemäß einem Packmuster für den Zielladungsträger, am Arbeitsplatz AP bereitgestellt werden müssen, ist an dieser Stelle irrelevant. Die endgültige Sequenzierung erfolgt ausschließlich in der Fördermittel-Ebene 24. Die Auswahl der Vertikalförderer 20 stellt lediglich eine optionale Vorsequenzierung dar, die vorzugsweise aber ebenfalls nicht erfolgt bzw. erfolgen muss. Die Auswahl der RBG 22 der auszulagernden Artikel innerhalb des Regals 16 erfolgt vorzugsweise ausschließlich wegoptimiert, d.h. die Wege der RBG 22 werden so kurz wie möglich gewählt, was in einer chaotischen Auslagerung aus den Regalplätzen R resultiert. Lediglich die Auswahl der Transferplätze T, an die die abgeholten Artikel von den RBG 22 abgegeben werden, kann als Vorsequenzierung berücksichtigt werden.

Die großen Artikelströme zwecks Ein- und Auslagerung können in der Fördermittel-Ebene 24 gehandhabt werden, weil sehr viele FTF 28 frei innerhalb der Fördermittel-Ebene 24 - entlang von vorgegebenen Fahrwegen 40 - fahren können. In der FT-Ebene 24 ist ausreichend Raum vorhanden, auch für Sequenzierungsaufgaben. Eine konventionelle Fördertechnik bietet die zur Sequenzierung benötigten Puffermöglichkeiten nicht, insbesondere nicht zur Entkopplung der Maschinen (Vertikalförderer 20, RBG 22 und Fördertechnik untereinander).

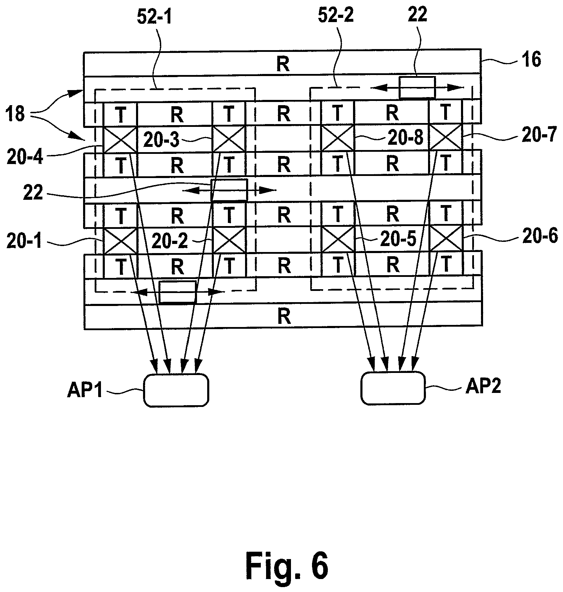

Fig. 6 dient der Illustration einer Zuordnung von Vertikalförderern 20 zu Arbeitsplätzen AP. Gezeigt sind drei nicht näher bezeichnete Regalblöcke und zwei Arbeitsplätze AP1 und AP2. Jeder Regalblock weist zwei Regale 16 auf, die eine Regalgassen 18 zwischen sich definieren, in welcher RBG 22 verfahrbar sind, um Artikel in die und aus den Regalplätzen R ein- und auszulagern. Die Vertikalförderer 20 sind zwischen den Regalblöcken angrenzend an die Regale 16 angeordnet. Es sind insgesamt acht Vertikalförderer 20-1 bis 20-8 gezeigt, die in zwei Liftgruppen 52-1 und 52-2 aufgeteilt sind. Die Vertikalförderer 20-1 bis 20-4 gehören zur ersten Liftgruppe 52-1. Die Vertikalförderer 20-5 bis 20-8 gehören zur zweiten Liftgruppe 52-2. Die erste Liftgruppe 52-1 ist dem ersten Arbeitsplatz AP1 zugeordnet. Die zweite Liftgruppe 52-2 ist dem zweiten Arbeitsplatz AP2 zugeordnet. Diese Zuordnung ist in Fig. 6 durch Pfeile angedeutet. Jeder der Lifte bzw. Vertikalförderer 20-1 bis 20-8 dient der Versorgung seines ihm zugeordneten Arbeitsplatzes AP. Der Transport der Artikel erfolgt über die FTF 28, die in der Fig. 6 nicht gezeigt sind. Jeder der Liftgruppen 52-1 und 52-2 kann eine eigene Flotte von FTF 28 zugeordnet sein. Unabhängig davon, in welcher Reihenfolge die Vertikalförderer 20 der entsprechenden Liftgruppen 52-1 bzw. 52-2 die Artikel in der Fördermittel-Ebene 24 andienen, können die FTF 28 die angedienten Artikel in der gewünschten Reihenfolge, d.h. sequenziert, zum jeweiligen Arbeitsplatz AP transportieren.

Eine Anzahl der FTF 28, die eine Flotte bilden, kann jederzeit variiert werden. Wenn z.B. die zweite Liftgruppe 52-2 außergewöhnlich viele Artikel zum Arbeitsplatz AP2 bringen muss, können vorübergehend FTF 28, die zur ersten Flotte gehören, die wiederum der ersten Liftgruppe 52-1 zugeordnet ist, der zweiten Liftgruppe 52-2 zugeordnet werden. Alternativ kann einer der Vertikalförderer 20-1 bis 20-4 der ersten Liftgruppe 52-1 für eine gewisse Zeit der zweiten Liftgruppe 52-2 zugeordnet werden. So kann bspw. der Vertikalförderer 20-3 inkl. seiner FTF 28 für eine gewisse Zeit der zweiten Liftgruppe 52-2 zugeordnet werden.

Es versteht sich, dass die Vertikalförderer 20 einer Liftgruppe 52 auch entfernt relativ zueinander angeordnet sein können. Es ist nicht erforderlich, dass die Vertikalförderer 20 einer Liftgruppe 52 alle direkt benachbart zueinander angeordnet sind. Die FTF 28 sind in der Lage, auch weit entfernte Vertikalförderer 20 materialflusstechnisch an einen entsprechenden Arbeitsplatz AP anzubinden. Dies gilt übrigens auch für entfernt angeordnete Regalanordnungen 14 (dezentrale Lagerstruktur), die über die Fördermittel-Ebene 24 bzw. FTF 28 miteinander verbunden sind. Diese freie Zuordenbarkeit der FTF 28 zu den Vertikalförderern 20 bzw. zu den Arbeitsplätzen AP und die sich daraus ergebenden Materialströme sind mit einer konventionellen Vorzone bzw. deren Fördertechnik nicht darstellbar. Bei der konventionellen Fördertechnik handelt es sich um Stetigförderer, deren Streckenführung und Verlauf fest vorgegeben sind und sich nicht ohne weiteres kurzfristig, und insbesondere vorübergehend, ändern lässt.

Fig. 7A dient u.a. der Verdeutlichung einer Sequenzierung. Fig. 7A zeigt eine Draufsicht auf eine Fördermittel-Ebene 24, die exemplarisch u.a. acht Vertikalförderer 20-1 bis 20-8 sowie einen Arbeitsplatz AP (geometrisch) einschließt. Die darüber oder darunter angeordneten Regale 16 sind nicht gezeigt. Jeweils rechts neben den Vertikalförderern 20 sind zwei Rechtecke inklusive einer Zahl zwischen 1 und 16 gezeigt. Diese Rechtecke repräsentieren sechzehn Artikel, die zur Abarbeitung eines Auftrags am Arbeitsplatz AP in einer aufsteigenden Reihenfolge von #1 bis #16 benötigt werden. Diese Artikel stehen z.B. auf hier nicht dargestellten Transferplätzen T (bzw. Übergabeplätzen in der Fördermittel-Ebene) der Vertikalförderer 20 und wurden von den RBG 22 "chaotisch" auf den Transferplätzen abgestellt. "Chaotisch" bedeutet in diesem Zusammenhang, dass die RBG 22 die Artikel ohne Berücksichtigung irgendeiner Sequenz, d.h. unsequenziert, aus den Regalen 16 ausgelagert und - optional vorsequenziert - auf den Transferplätzen T abgestellt haben. Zumindest der Auslagerungsvorgang erfolgt vorzugsweise wegoptimiert. Dies bedeutet, dass die RBG 22, sofern sie frei, d.h. nicht beladen, sind, alle Artikel des Auftrags beim Passieren eines entsprechenden Regalplatzes R mitnehmen und an den nächsten freien Transferplatz T abgeben können. Somit sind die Artikel chaotisch über die Vertikalförderer 20-1 bis 20-8 verteilt.

Es versteht sich, dass die gezeigte Zuordnung (zwei Artikel pro Vertikalförderer 20) lediglich zum Zwecke einer vereinfachten Erläuterung gewählt ist, um eine zeitliche Komponente auszublenden. Natürlich kann jeder der Vertikalförderer 20 - über die Zeit - mehr als zwei Artikel in die Fördermittel-Ebene 24 transportieren, sobald ein zugeordneter Transferplatz T bzw. Übergabeplatz wieder frei ist. Die Fig. 7A zeigt eine Momentaufnahme, bei der die RBG 22 alle Artikel #1 bis #16 auf den Transferplätzen T abgestellt haben bzw. die Artikel #1 bis #16 bereits in die Fördermittel-Ebene 24 zu Übergabeplätzen verbracht wurden. Die Übergabeplätze liegen in der Fördermittel-Ebene und stellen die Orte bzw. Bereiche dar, wo die Vertikalförderer die Artikel an die FTF 28 übergeben. Dabei kann es sich um Vorrichtungen handeln, die separat zu den Vertikalförderern 20 angeordnet sind. Es kann sich aber auch um die Vertikalförderer 20 selbst handeln, z.B. wenn sich deren LAM auf dem Niveau der Fördermittel-Ebene 24 zwecks Übergabe an die FTF 28 befinden.

Am Arbeitsplatz AP der Fig. 7A werden die Artikel in einer aufsteigenden Reihenfolge #1 bis #16 benötigt. Zu diesem Zweck erteilt der Flottenmanager FM (nicht dargestellt) einem ersten FTF 28-1 einen ersten FTF-Fahrauftrag, um den Artikel #1 vom Vertikalförderer 20-2 über einen Fahrweg 40-1 zum Arbeitsplatz AP zu transportieren, der die Segmente 46-1 bis 46-6 entlang der Wegpunkte 44 umfasst. Ein zweites FTF 28-2 bekommt einen FTF-Fahrauftrag zum Transport des Artikels #2 vom Vertikalförderer 20-2 zum Arbeitsplatz AP. Der Fahrweg 40-2 des zweiten FTF 28-2 umfasst ebenfalls die Segmente 46-1 bis 46-6. Der Artikel #3 ist vom dritten Vertikalförderer 20-3 abzuholen. Der FM erteilt einem dritten FTF 28-3 einen dritten FTF-Fahrauftrag, der einen FTF-spezifischen Fahrweg 40-3 definiert, der z.B. die Segmente 46-7 bis 46-12 und 46-5 sowie 46-6 umfasst. Es versteht sich, dass die FTF-Fahraufträge zeitlich so aufeinander abgestimmt sind, dass die Artikel #1 bis #3 in der gewünschten aufsteigenden Reihenfolge beim Arbeitsplatz AP ankommen. Dabei kann die Wahl des Fahrwegs 40 bzw. die Auswahl der entsprechenden Segmente 46 einen Einfluss auf die Reihenfolge haben.

In der Fig. 7A ist ein alternativer Fahrweg 40-3' für das dritte FTF 28-3 gezeigt (siehe Strichlinien). Dieser alternative Fahrweg 40-3' umfasst die Segmente 46-7 bis 46-10, 46-13 und 46-14. Dieser alternative Fahrweg 40-3' ist kürzer als der andere Fahrweg 40-3 für das dritte FTF 28-3. Unter der Voraussetzung, dass die FTF 28 alle mit einer gleichen (konstanten) Geschwindigkeit fahren, kommt das dritte FTF 28-3 bei einer Auswahl des alternativen Fahrwegs 40-3' früher als gemäß seinem ursprünglichen Fahrweg 40-3 am Arbeitsplatz AP an.

Im Gegensatz zu klassischen Fördertechniken (z.B. Rollenbahnen oder Bandförderer) sind die Fahrwege 40 frei aus den Segmenten 46 zusammensetzbar. Zwar gibt es bei klassischen Fördertechniken möglicherweise ebenfalls mehrere mögliche Strecken von einem ersten zu einem zweiten Punkt innerhalb eines Lagers. Jedoch ist die Anzahl dieser möglichen Strecken begrenzt und verschwindend gering im Vergleich zu der großen, nahezu unendlichen Anzahl von konstruierbaren Streckenverläufen bzw. Fahrwegen 40, die sich aus dem "Baukasten" der Segmente 46 zusammensetzen lassen. Diese Mannigfaltigkeit von möglichen Fahrwegen 40 ist ein Aspekt, der die finale Reihenfolgebildung in der Fördermittel-Ebene 24 möglich macht, insbesondere wenn sehr viele FTF 28 gleichzeitig betrieben werden. Dies wird nachfolgend anhand der Fig. 7B näher beschrieben werden.

Die Fig. 7B zeigt eine exemplarische Topologie 60, die ein Raster 62 aus Gitterpunkten bzw. Wegpunkten 44 aufweist. Die Topologie 60 umfasst ferner Hindernisse, wie z.B. einen Vertikalförderer 20 und Regalsteher 48. Es versteht sich, dass die Topologie 60 die Positionen dieser Elemente aufweist. Die Topologie 60 kann ferner die Abmessungen der Grundfläche 26 aufweisen.

Die Wegpunkte 44 der Fig. 7B stellen Schnittpunkte eines (imaginären) Gitters dar, das durch Strichlinien in der linken oberen Ecke angedeutet ist. Exemplarisch sind 25 Gitterpunkte 44-1 bis 44-25 gezeigt, die entlang eines regelmäßigen Gitters angeordnet sind. Es versteht sich, dass das Gitter nicht regelmäßig aufgebaut sein muss. Die Wegpunkte 44 können auch chaotisch über die Fläche 26 verteilt sein.

Die Wegpunkte 44 sind über Segmente 46 miteinander verbindbar. Die Segmente 46 sind so definiert, dass die FTF 28 während einer Fahrt entlang den Segmenten 46 nicht mit Hindernissen (z.B. den Regalstehern 48) kollidieren. Über die Segmente 46 ist ein Wegpunkt 44, z.B. der Wegpunkt 44-13, nicht nur mit seinen unmittelbar nächsten Nachbarn (44-8, 44-12, 44-14 und 44-18) verbunden, sondern über diagonale Segmente 46' auch mit weiter entfernten Wegpunkten 44 (44-7, 44-9, 44-17 und 44-19). Die Segmente 46" sind gekrümmt und verbinden den Wegpunkt 44-13 z.B. mit den Wegpunkten 44-6, 44.2, 44-4, 44-10, 44-16, 44-22, 44-24 oder 44-20. Andere Segmente 46 sind beliebig definierbar, z.B. das Segment 46'" entlang einer Geraden vom Wegpunkt 44-7 zum Wegpunkt 44-23. Die Möglichkeiten, Segmente 46 zu definieren, und somit Fahrwege 40 zu bauen, sind unbegrenzt, insbesondere weil der Verlauf der Verbindung, d.h. des Segments 46, zwischen zwei Wegpunkten 46 beliebig definiert werden kann.

Zurückkehrend zur Fig. 7A kann neben der Wahl des Verlaufs des Fahrwegs 40 von einem Start-Vertikalförderer 20 zum Ziel-Arbeitsplatz AP (d.h. neben der Auswahl der Segmente 46) die Reihenfolge ferner durch eine Startzeit, zu welcher das entsprechende FTF 28 losfährt, oder durch eine Geschwindigkeit beeinflusst werden, mit der sich das entsprechende FTF 28 bewegt.

Außerdem können die FTF 28 Sequenzierungsharfen 50 durchfahren (vgl. Fig. 5), die in der Fig. 7A aber nicht gezeigt sind.

Zusätzlich können in der Fördermittel-Ebene 24 Puffer-Einrichtungen (in Fig. 7A nicht gezeigt) vorgesehen sein.

Außerdem versteht es sich, dass im Beispiel der Fig. 7A mehr oder weniger als drei FTF 28-1 bis 28-3 eingesetzt werden können, um den Kommissionierauftrag zu erledigen, der die Artikel #1 bis #16 umfasst. Der Verlauf der Fahrwege 40 der FTF 28 ist aufgrund der Barrierefreiheit, wenn man von den Vertikalförderern 20 und den Regalstehern 48 absieht, frei wählbar.

Als weitere Sequenzierungsalternative können die FTF 28 Überholmanöver ausführen, indem die FTF 28 z.B. eine Schleife anstatt geradeaus fahren. Während das eine FTF 28 eine Schleife fährt, kann ein anderes FTF 28 auf der Geradeausspur überholen. Natürlich ist dieser Vorgang auch umgekehrt möglich, so dass das FTF 28 auf der Schleife überholt, während das andere FTF 28 geradeaus fährt. In diesem Fall kann es sinnvoll sein, zusätzlich die Fahrgeschwindigkeiten anzupassen.

Nachfolgend wird eine in den Figuren nicht näher veranschaulichte Kommunikation zwischen dem Materialflussrechner MFR und dem Flottenmanager FM in Zusammenhang mit einem Beladevorgang bei einer Beladestation 130 beschrieben.

Ein beliebiges Stückgut 116, z.B. mit der #1001, ist zur Beladung bereit. Das Stückgut #1001 steht z.B. unmittelbar vor dem Trennförderer 102. Bevor eine Übergabe an ein FTF 28 initiiert werden kann, muss ein neues FTF 28 angefordert werden, um an einem entsprechenden Belade-Wegpunkt 44 anzuhalten bzw. diesen synchronisiert zu durchfahren. Dazu sendet der Materialflussrechner MFR einen Fahrauftrag an den Flottenmanager FM, der die Information enthält, dass das Stückgut #1001 z.B. am Wegpunkt #13 zur Abholung bereitsteht. Der Flottenmanager FM empfängt diesen Fahrauftrag und prüft, ob bereits eine entsprechende Auftrags-ID im System existiert. Falls nicht, wird ein neues FTF 28 mit der Bezeichnung z.B. W42 ausgewählt, um den Wegpunkt #13 zu fahren. Der Fahrauftrag wird gespeichert, die Fahrauftrags-ID und eine geeignete Route werden an das ausgewählte FTF 28 übermittelt.

Das ausgewählte FTF 28 fährt zu dem gewünschten Wegpunkt Nr. 13 und sendet ein entsprechendes Signal an den Flottenmanager FM. Der Flottenmanager FM findet einen Auftrag für diese Auftrags-ID und kann nun den Auftrag abschließen.

Der Materialflussrechner MFR startet dann den Transfer des Stückguts Nr. #1001. Dies bedeutet, dass die Beladung des FTF 28 mit der Bezeichnung W42 initiiert werden kann. Zu diesem Zweck wird ein Signal an eine weitere Steuerung ausgegeben, die für die Fördertechnik verantwortlich ist, um das Stückgut #1001 von der Fördertechnik auf den Trennförderer 102 und vom Trennförderer 102 auf das FTF 28 zu bewegen. Anschließend wird das FTF 28 an einen gewünschten Zielort verfahren, um das Stückgut #1001 aufnehmen.

Auf ähnliche Weise läuft ein Entladevorgang ab.

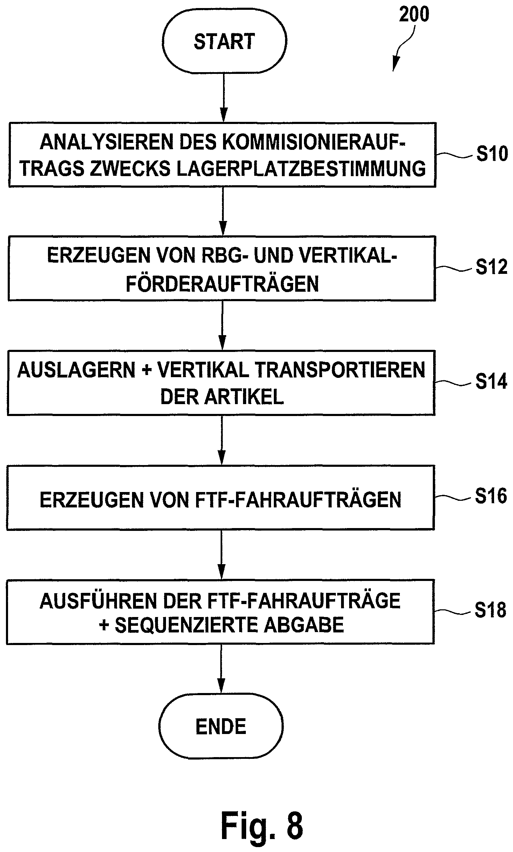

Fig. 8 zeigt ein Flussdiagramm, das verallgemeinert das oben beschriebene Verfahren zum chaotischen Auslagern und sequenzierten Bereitstellen der Artikel an dem Arbeitsplatz AP erläutert.

In einem ersten Schritt S10 werden die Kommissionieraufträge bzw. der Kommissionierauftrag analysiert, um die Regalplätze R zu bestimmen, in welchen die benötigten Artikel gelagert sind. In einem Schritt S12 werden RBG- und Vertikalförderaufträge erzeugt und an die RBG 22 und die Vertikalförderer 20 übertragen. In einem Schritt S14 werden die benötigten Artikel von den RBG 22 ausgelagert und von den Vertikalförderern 20 vertikal in die Fördermittel-Ebene 24 transportiert. In einem Schritt S16 werden FTF-spezifische Fahraufträge bzw. FTF-Fahraufträge erzeugt und an die betroffenen bzw. ausgewählten FTF 28 übertragen. In einem Schritt S18 werden die FTF-Fahraufträge von den FTF 28 ausgeführt, um die Artikel in der gewünschten absoluten Reihenfolge an die Arbeitsplätze AP abzugeben.

Bisher wurde im Wesentlichen eine Auslagerung mit finaler sequenzierter Übergabe an eine Zielstelle, wie z.B. einen der Arbeitsplätze AP, zwecks Kommissionierung beschrieben. Der Materialfluss 12 erfolgte dabei aus der Regalanordnung 12 über die Vertikalförderer 20, die in Bezug auf die FTF-Fahraufträge bzw. FTF-Fahrwege Startstellen in der Fördermittel-Ebene 24 darstellten, an die Arbeitsplätze AP, die in Bezug auf die FTF-Fahraufträge bzw. FTF-Fahrwege 40 die Zielstellen darstellten.

Es versteht sich von selbst, dass die Erfindung auch beim Einlagern ihre Vorteile hat. Der Materialfluss 12 ist beim Einlagern umgekehrt gerichtet, d.h. die dann einlagernden Vertikalförderer 20 sind dann Zielstellen für die FTF 28, die aus dem WE (siehe Fig. 1) kommen, und (nicht in der Fig. 1 dargestellte) Vereinzelungsstationen, wo z.B. sortenreine Wareneingangspaletten einzeln auf die FTF 28 vereinzelt werden, sind dann Startstellen für die FTF 28 in der Fördermittel-Ebene 24. Die Fördermittel-Ebene 24 stellt dann hinsichtlich einer Materialflussplanung eine Stufe beim Prozess der Artikelverteilung dar. Bei der Artikelverteilung werden die WE-Artikel materialflusstechnisch über die Regalanordnung 14 verteilt (SKU-Spread), so dass später beim Auslagern alle Artikel eines beliebigen Kommssionierauftrags aus den Regalplätzen R von vorzugsweise einer einzigen Regalgasse 18 auslagerbar sind. Auch ein Lagerfüllgrad, der im Idealfall in jedem Bereich der Regalanordnung 14 gleich sein sollte, kann bei der Planung des Wareneinlagerungsprozesses berücksichtigt werden.

Hier spielt die Fördermittel-Ebene 24 eine entscheidende Rolle, weil, im Gegensatz zur klassischen Vorzone mit Stetigförderern, jeder Regalplatz R über einen kürzesten Weg erreichbar ist. Die FTF 28 können sich frei unterhalb, oberhalb oder in der Regalanordnung 14 entlang von Wareneingangsartikel-spezifisch frei wählbaren, vorzugsweise wegoptimierten, Fahrwegen 40 bewegen. Die FTF 28 fahren solche Vertikalförderer 20 an, die möglichst nah zu einem gewünschten Einlagerungsregalplatz R liegen. Bei einer mehrfachtiefen Handhabung spielt auch die Sequenz wieder eine Rolle, so dass die Fördermittel-Ebene 24 auch beim Einlagern sequenzierend arbeitet.

Die Fig. 9A und 9B dienen einer Verdeutlichung der Unterschiede hinsichtlich eines Materialflusses 12 bzw. Durchsatzes, der mit einem herkömmlichen Lager- und Kommissioniersystem (Fig. 9A) mit einer klassischen Vorzone (stirnseitige Lifte und Sortier-Kreisel) und der mit dem Lager- und Kommissioniersystem (Fig. 9B) gemäß der Erfindung möglich ist. Gemäß der Erfindung kann jeder der Vertikalförderer 20 jedem beliebigen Arbeitsplatz AP (Start/Zielstelle) zugeordnet werden, wobei es eine Vielzahl unterschiedlicher, kurzer Fahrwege 40 zwischen dem jeweiligen Vertikalförderer 20 und dem zugeordneten Arbeitsplatz AP gibt, die in dem großen Sequenzierungs- bzw. Verteilungspotenzial der Fördermittel-Ebene 24 resultieren.

Die Fig. 9A und 9B zeigen zwei Regalanordnungen 14, die jeweils gleich groß sind, d.h. eine gleiche Anzahl von Regalplätzen R und eine gleiche Anzahl von Regalgassen 18 aufweisen. Auch die Dimensionen der Regalanordnung 14 sind identisch. Die Fig. 9A und 9B unterscheiden sich jedoch in der Anzahl und Positionierung der Vertikalförderer 20 und in den möglichen, unterschiedlichen Fahrwegen 40 von einem der Vertikalförderer 20 zu einem der Arbeitsplätze AP und zurück.

In der Fig. 9A sind vier stirnseitig zu den jeweiligen Regalgassen 18-1 bis 18-4 angeordnete Vertikalförderer 20-1 bis 20-4 vorgesehen, die über Fördertechnikstiche 70 mit einem Sortier-Kreisel 72 verbunden sind. Die Fördertechnikstiche 70 und der Sortier-Kreisel 72 sind als Stetigförderer ausgebildet und sind in einer klassischen Vorzone 74 angeordnet, wo auch drei Arbeitsplätze AP1 bis AP3 angeordnet sind. Jeder der Vertikalförderer 20-1 bis 20-4 kann jeden beliebigen der Arbeitsplätze AP1 bis AP3 versorgen. Im Beispiel der Fig. 9A beliefert der erste Vertikalförderer 20-1 sowohl den Arbeitsplatz AP1 (siehe strichpunktierte Linie) als auch den Arbeitsplatz AP 2 (siehe Strichlinie). Der erste Arbeitsplatz AP1 wird ferner vom dritten Vertikalförderer 20-3 versorgt. Der zweite Arbeitsplatz AP2 wird ferner vom vierten Vertikalförderer 20-4 versorgt. Sowohl die stirnseitigen Vertikalförderer 20-1 bis 20-4 als auch der Sortier-Kreisel 72, der üblicherweise unidirektional umlaufend betrieben wird, stellen einen materialflusstechnischen "Flaschenhals" dar. Zwar lässt sich jeder der Arbeitsplätze AP1 bis AP3 mit mehreren der Vertikalförderer 20-1 bis 20-4 versorgen. Jedoch müssen alle Lagergüter über den (gleichen) Sortier-Kreisel 72 transportiert werden. Der Sortier-Kreisel 72 hat eine begrenzte Kapazität sowohl betreffend seine Aufnahmefähigkeit als auch betreffend seine Sequenzierungsfähigkeit. Diese Nachteile verstärken sich, wenn mehrere der Arbeitsplätze AP1 bis AP3 von jeweils mehreren der Vertikalförderer 20-1 bis 20-4 versorgt werden. Von jedem der Vertikalförderer 20-1 bis 20-4 gibt es nur einen wirklich kurzen Weg zu einem bestimmten Arbeitsplatz AP. Dieser "kurze" Weg führt immer über den Sortier-Kreisel 72. Viele und größere Streckenabschnitte des Sortier-Kreisels 72 werden gemeinsam von mehreren der Vertikalförderer 20-1 bis 20-4 zum Versorgen der Arbeitsplätze AP1 bis AP3 benutzt. Somit steigt eine "Verkehrsdichte" im Sortier-Kreisel 72 und erreicht rasch ihre natürliche Grenze.

Bei der Erfindung ist dies anders. Wie in der Fig. 9B dargestellt, kann ebenfalls jeder der Vertikalförderer 20-1 bis 20-20 jeden der Arbeitsplätze AP1 bis AP5 versorgen. In der Fig. 9B wird der zweite Arbeitsplatz AP2 exemplarisch von den Vertikalförderern 20-16, 20-12, 20-8, 20-13 und 20-20 versorgt. Der vierte Arbeitsplatz AP4 wird exemplarisch von den Vertikalförderern 20-16, 20-2, 20-13, 20-10 und 20-20 versorgt. Die Versorgung bzw. die Zuordnung zum zweiten Arbeitsplatz AP2 ist mittels fett gedruckter Pfeile verdeutlicht. Die Versorgung des bzw. die Zuordnung zum vierten Arbeitsplatz AP4 ist mittels strichpunktierter Pfeile verdeutlicht. Diese Pfeile repräsentieren viele verschiedene kurze (Fahr-)Wege, die sich unterscheiden und die, wenn überhaupt, nur wenige gemeinsame Abschnitte aufweisen. Dies ist in der Topologie 60 begründet, die unter Bezugnahme auf die Fig. 7A und 7B bereits beschrieben wurde und unter Bezugnahme auf Fig. 7C noch näher beschrieben werden wird.

Wenn z.B. der erste Vertikalförderer 20-1 der Fig. 9B den fünften Arbeitsplatz AP5 versorgen soll, so gibt es viele unterschiedliche kurze Wege, die sich insbesondere überhaupt nicht überlappen. Ein erster möglicher Weg verläuft zuerst in Z und dann in X. Ein zweiter möglicher Weg verläuft zuerst in X und dann in Z. Ein dritter möglicher Weg verläuft "treppenförmig" von der linken oberen Ecke der Fig. 9B in die rechte untere Ecke der Fig. 9B.

In der Fig. 9B kommt man ohne jeglichen Sortier-Kreisel aus. Es sind überhaupt keine Sortier-Kreisel vorgesehen. Dafür gibt es eine Vielzahl von kurzen Wegen zwischen Start- und Zielstellen.

Die große Anzahl möglicher Wege ergibt sich daraus, dass die Topologie 60 eine beliebige Definition der Segmente 46 zulässt. In diesem Zusammenhang wird auf die Fig. 7C verwiesen. Die große Anzahl möglicher Wege lässt es wiederum zu, dass beliebig viele FTF 28 gleichzeitig starten, stoppen und sich frei im Raum bzw. in der Fläche 26 bewegen können. Der Transport erfolgt parallel.

Die Fig. 7C zeigt eine Vielzahl von Wegpunkten 44, die entlang eines Rasters 62 (regelmäßige Punktanordnung) angeordnet sind. Ein zentral angeordneter Wegpunkt 44' weist benachbarte Wegpunkte 44 unterschiedlichen Grades auf. Die benachbarten Wegpunkte 44 werden nachfolgend auch als Nachbarn bezeichnet. Die in den orthogonalen Richtungen X und Z benachbarten Wegpunkte stellen Nachbarn ersten Grades (NB1) dar. Die in diagonaler Richtung direkt benachbarten Wegpunkte 44 stellen Nachbarn zweiten Grades (NB2) dar. Diese Nachbarschaftsbeziehungen lassen sich beliebig fortsetzen. In der Fig. 7C sind ferner Nachbarn dritten Grades (NB3) und Nachbarn vierten Grades (NB4) gezeigt.

Vom zentralen Wegpunkt 44' lassen sich beliebige Segmente 46, vorzugsweise in Form gekrümmter Bahnen, definieren. So stellen die Segmente 46 zu den Nachbarn zweiten Grades (NB2) z.B. Viertelkreise dar. Der benachbarte Wegpunkt 44 des zweiten Grades ist über den Viertelkreis schneller erreichbar als über die Kombination zweier orthogonaler Segmente zu den Nachbarn ersten Grades (NB1).

Der Materialflussrechner MFR (siehe Fig. 1) ist eingerichtet, Fahrwege 40 bzw. Segmente 46 zwischen beliebigen Wegpunkten 44 zu definieren, wobei insbesondere direkte, kurze Verbindungen (Segmente 46) definierbar sind, wie es in Fig. 7C gezeigt ist.

Die FTF 28 können derartigen Segmenten 46 umso leichter folgen, wenn es sich bei den Segmenten 46 um virtuelle Strecken handelt. Selbstverständlich können die Segmente 46 auch physisch auf einen Hallenboden geklebt werden, wobei sich eine Rekonfiguration aufwendiger als bei virtuellen Segmenten 46 herausstellt. Aber im Vergleich zu einer permanent vorgesehenen Fördertechnik, bei der der Streckenverlauf nach der Installation eigentlich gar nicht mehr änderbar ist und meist orthogonal ausgerichtet ist, zeichnet sich die Topologie 60 durch eine hohe Flexibilität hinsichtlich möglicher Streckenführungen aus. So ist es u.a. möglich, eine Vielzahl der oben erwähnten kurzen Wege zu definieren, auf denen die Lagergüter von einer Startstelle zu einer Zielstelle transportierbar sind, wobei sich die Wege im Wesentlichen nicht überlappen. Auf diese Weise wird der oben beschriebene Flaschenhals vermieden. Bei der Erfindung sind die Segmente 46 beliebig und einzeln bidirektional nutzbar, wohingegen bei einer konventionellen Fördertechnik ganze Strecken bzw. Abschnitte reversiert werden müssten.

In der Fig. 9A ist die Durchsatzleistung endlich, weil nur wenige Vertikalförderer 20 vorgesehen sind und der Sortier-Kreisel 72 eine endliche Kapazität hat. In der Fig. 9B kann, bedingt durch die größere Anzahl von Vertikalförderern 20 und möglicher Fahrwege 40, eine wesentlich höhere Durchsatzleistung erreicht werden. Bei einer Layout-Planung kann bereits eine maximale Ausbaustufe (Anzahl der Vertikalförderer 20, Start/Zielstellen, FTF 28, etc.) konfiguriert werden. So kann das System der Fig. 9B schrittweise, skalierbar und den sich über die Zeit ändernden Anforderungen des Marktes (z.B. E-Commerce) jederzeit angepasst werden.

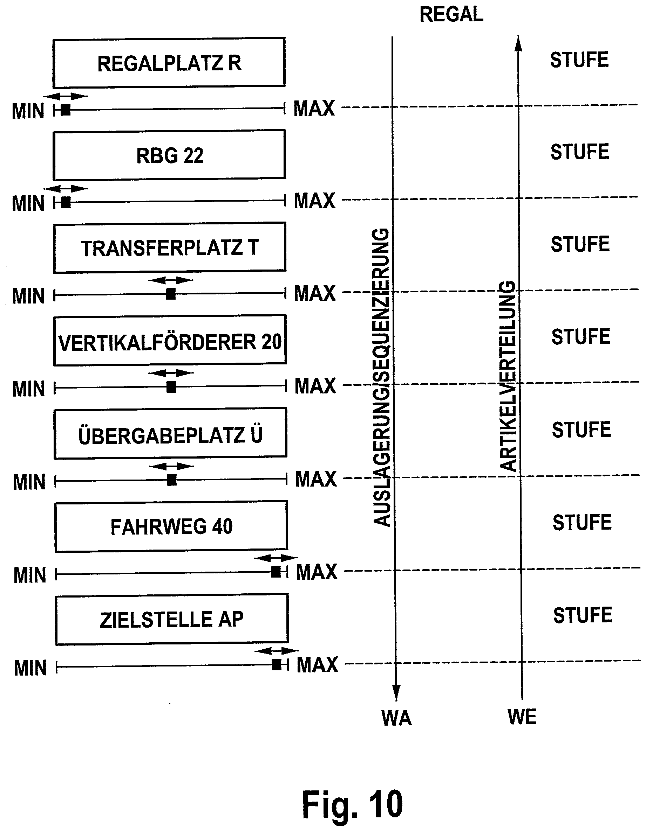

Fig. 10 dient der Verdeutlichung einer dynamischen Sequenzverschiebung bzw. einer dynamischen (Artikel-)Verteilungsverschiebung.

Der Materialfluss 12 stellt ein Regelsystem dar. Beim Kommissionieren wird ausgelagert. Der Materialfluss 12 ist dabei von den Regalplätzen R in Richtung des Warenausgangs WA gerichtet. Beim Einlagern ist der Materialfluss 12 vom Wareneingang WE in Richtung der Regalplätze R gerichtet. Beim Kommissionieren bzw. Auslagern ist auf eine Sequenzierung zu achten, da die auszulagernden Artikel in einer gewünschten absoluten Reihenfolge an der Zielstelle (Arbeitsplatz AP) ankommen sollen. Beim Einlagern von Wareneingangs-Artikeln in die Regale 16 ist darauf zu achten, dass die Artikel möglichst gleich verteilt sind (SKU-Spread).

Unabhängig davon, in welche Richtung der Materialfluss 12 gerichtet ist, sind folgende Elemente beteiligt: Regalplätze R, RBG 22, Transferplätze T, Vertikalförderer 20, Übergabeplätze Ü, Fahrwege 40 und Start/Zielstellen. Jedem dieser Elemente kann eine eigene Regelstufe zugewiesen sein, die der Materialflussrechner MFR einstellt. Dies ist in der Fig. 10 durch horizontale Regler angedeutet, die direkt unter den Elementen abgebildet sind und zwischen den beiden Extremstellungen MIN und MAX eingestellt werden können. Es versteht sich, dass die Änderung eines der Regler Auswirkungen auf die Einstellung der anderen Regler hat.

In der Fig. 10 sind exemplarische Reglereinstellungen für einen Auslagerungsprozess gezeigt. Der Materialflussrechner MFR bekommt einen oder mehrere Aufträge, die hinsichtlich der Artikel analysiert werden, die zur Abarbeitung der Aufträge benötigt werden. Nach der Analyse steht fest, wo sich potenzielle Artikel-Kandidaten für den Auftrag innerhalb der Regalanordnung 14 befinden. Eine erste Regelstufe, die den Regalplätzen R zugewiesen ist, ist in der Fig. 10 so eingestellt, dass der MFR frei wählen kann, aus welchen der möglichen Regalplätze R ein benötigter Artikel ausgelagert wird. Ähnliches gilt für die Regelstufe, die den RBG 22 zugewiesen ist. Hinsichtlich einer Sequenz sind die Anforderungen an die RBG 22 minimal eingestellt, so dass die RBG 22 die auszulagernden Artikel chaotisch auslagern und abgeben dürfen, was wiederum in optimierten (kurzen) Wegen resultiert. Die Regelstufen, die den Transferplätzen T, den Vertikalförderern 20 und den Übergabeplätzen Ü zugeordnet sind, sind mittig eingestellt. Die Regelstufe, die den Fahrwegen 40 zugeordnet ist, muss (zwingend) viel Sequenzierungsarbeit leisten, weil die ausgelagerten Artikel chaotisch in der Fördermittel-Ebene 24 ankommen. Die FTF 28 sind also hauptverantwortlich dafür, dass die ausgelagerten Artikel in der richtigen Reihenfolge an den Zielstellen (Arbeitsplätzen AP) ankommen. Die den Zielstellen zugeordnete Regelstufe ist ebenfalls in ihrer Maximalstellung gezeigt, weil die auszulagernden Artikel genau in der richtigen Reihenfolge am Arbeitsplatz AP ankommen sollen.

Es versteht sich, dass derartige Reglereinstellungen auch in der umgekehrten Richtung aufeinander abgestimmt werden, wenn also Wareneingangsartikel auf die Regalplätze R verteilt werden. Die große Vielzahl von möglichen Fahrwegen in der Fördermittel-Ebene 24 erlaubt eine hohe Flexibilität bei der Fahrwegsplanung. Engstellen hinsichtlich des Materialflusses 12 gibt es in der Fördermittel-Ebene 24 nicht.

Der Materialflussrechner MFR ist eingerichtet, die einander beeinflussenden und voneinander abhängigen Reglerstufen optimiert einzustellen, so dass die Leistung des Gesamtsystems maximal ist. Es verhält sich also vergleichbar zu einem Equalizer. Jede der Materialflusskomponenten stellt einen eigenen Regler dar. Stimmt man die Regler optimal aufeinander ab, so erhält man einen "sauberen", guten Klang.

Die Einstellbarkeit der einzelnen Regelstufen lässt die Wahl einer anfänglich idealen Größenordnung (Lager-Layout) zu.

### Bezugszeichenliste:

- 10: Lager- und Kommissioniersystem
- WE: Wareneingang
- WA: Warenausgang
- 12: Materialfluss
- 14: Regalanordnung
- 16: Regal
- 18: (Regal-)Gasse
- 20: Vertikalförderer
- T: Transferplätze
- R: Regalplätze
- 22: Regalbediengerät/RBG
- AP: Arbeitsplatz
- 24: Fördermittel-Ebene
- 26: Fahr-/Aktionsfläche
- 28: Fahrerloses Transportfahrzeug (FTF)/Shuttle
- MFR: Materialflussrechner
- LVR: Lagerverwaltungsrechner
- FM: Flottenmanager
- 30: (Basis-)Fahrzeug
- 32: Artikelaufnahme
- 34: Aufsatz
- 36: (proprietäres) Kommunikationsprotokoll
- 40: Fahrweg
- 42: Liftanordnung
- 44: Wegpunkt
- 46: Segment
- 48: Regalsteher
- 50: Sequenzierungsharfe
- 52: Liftgruppe
- 60: Topologie
- 62: Raster
- 70: Fördertechnik-Stiche
- 72: Sorter-Kreisel
- 74: Vorzone

## Patentansprüche

1. Lager- und Kommissioniersystem (10) zum Ein- und Auslagern einer Vielzahl von Lagergütern, wobei die Lagergüter beim sequenzierten Auslagern in einer gewünschten Reihenfolge an einer Zielstelle ankommen sollen oder wobei die Lagergüter beim Einlagern möglichst gleich in Regale verteilt werden, mit:
einer statisch angeordneten Regalanordnung (14), die eine Vielzahl der Regale (16) aufweist, wobei die Regale (16) jeweils eine Vielzahl von übereinander und nebeneinander angeordneten Regalplätzen (R) aufweisen, in welche die Lagergüter ein- und auslagerbar sind, wobei die Regale (16) mindestens eine Regalgasse (18) zwischen sich definieren;
einer Vielzahl von statisch angeordneten Vertikalförderern (20), wobei für eine materialflusstechnische Anbindung der Regalgassen (18) jeweils mehrere der Vertikalförderer (20) entweder seitlich an Längsseiten der entsprechenden Regale (16) angrenzen oder innerhalb der entsprechenden Regale (16) angeordnet sind und wobei die Vertikalförderer (20) die Lagergüter im Wesentlichen vertikal transportieren;
einer Vielzahl von Transferplätzen (T), die für eine materialflusstechnische Entkopplung zwischen den Vertikalförderern (20) und den Regalbediengeräten (22) in der Regalanordnung (14) angeordnet sind, wobei jedem der Vertikalförderer (20) mindestens einer der Transferplätze (T) zugeordnet ist; und
einer Vielzahl von Regalbediengeräten (22), die, vorzugsweise im Wesentlichen nur, in den Regalgassen (18), vorzugsweise schienengeführt, verfahrbar sind, wobei die Regalbediengeräte (22) die Lagergüter, ein- und auslagern und im Wesentlichen horizontal entlang den Regalgassen (18) transportieren;
wobei das Lager- und Kommissioniersystem gen**kennzeichnet ist durch**:
eine Fördermittel-Ebene (24),
die im Wesentlichen barrierefrei, insbesondere frei von Regalplätzen (R), ist;
die sich horizontal unter der, über der oder **durch** die Regalanordnung (14) erstreckt;
die fördertechnisch über die Vertikalförderer (20), die vertikal von der Regalanordnung (14) bis in die Fördermittel-Ebene (24) reichen, an die Regalanordnung (14) gekoppelt ist, wobei jedem der Vertikalförderer (20) mindestens ein Übergabeplatz (Ü) in der Fördermittel-Ebene (24) zugeordnet ist;
die eine Vielzahl von Start/Zielstellen aufweist, wobei jeder der Vertikalförderer (20) jeweils über mehrere verschiedene, kurze Fahrwege (40) an jede der Start/Zielstellen koppelbar ist; und die eine Grundfläche (26) aufweist, die eine Topologie (60) aus einer Vielzahl von Wegpunkten (44) und Segmenten (46) aufweist; die eine Vielzahl von autonomen fahrerlosen Transportfahrzeugen, FTF, (28) aufweist, die entlang den Segmenten (46) geführt fahren;
und einen Materialflussrechner (MFR), der Zugriff auf die Topologie (60) hat und der zum Erzeugen und Ausgeben von Lagergut-spezifischen, sequenzgewichteten oder verteilungsgewichteten Transportaufträgen eingerichtet ist, um die Lagergüter zwischen den Regalplätzen (R) und den Start/Zielstellen zu transportieren, wobei die Transportaufträge jeweils einen Fahrweg (40), der zusammenhängende Segmente (46) darstellt, in der Fördermittel-Ebene (24) aufweisen, entlang dem die Lagergüter zweckgebunden zwischen den Übergabeplätzen (Ü) und den Start/Zielstellen mittels autonomen, fahrerlosen Transportfahrzeugen, FTF, (28) bewegt werden, wobei jedes der Segmente (46) einen der Wegpunkte (44) mit einem anderen der Wegpunkte (44) verbindet.

2. System nach Anspruch 1, wobei die Wegpunkte (44) entlang eines regelmäßigen Rasters (62) angeordnet sind.

3. System nach Anspruch 1 oder 2, wobei der Materialflussrechner (MFR) ferner eingerichtet ist, jedes der Segmente (46) barrierefrei von einem der Wegpunkte (44) zu einem anderen Wegpunkt (44) zu definieren, der ein Nachbar zweiten bis x-ten Grades ist.

4. System nach einem der Ansprüche 1 bis 3, wobei die Vielzahl der Regalplätze (R) eine erste Regelstufe darstellt, wobei die Vielzahl der Regalbediengeräte (22) eine zweite Regelstufe darstellt, wobei die Vielzahl der Vertikalförderer (20) eine dritte Regelstufe darstellt, wobei die Vielzahl von möglichen Fahrwegen (40) eine vierte Regelstufe darstellt und wobei die Vielzahl von Start/Zielstellen eine fünfte Regelstufe darstellt.

5. System nach Anspruch 4, wobei die Vielzahl der Transferplätze (T) eine weitere Regelstufe darstellt.

6. System nach Anspruch 4 oder 5, wobei die Übergabeplätze (Ü) eine noch weitere Regelstufe darstellen.

7. System nach einem der Ansprüche 4 bis 6, wobei jeder der Regelstufen für die Planung eines Auslagerungsprozesses eine eigene Sequenzierungsstufe darstellt und jeder der Regelstufen für die Planung eines Einlagerungsprozesses eine eigene Verteilungsstufe darstellt.

8. System nach einem der Ansprüche 4 bis 7, wobei der Materialflussrechner (MFR) eingerichtet ist, die Regelstufen durch Gewichtung so aufeinander abzustimmen, dass eine Auslagerleistung bzw. eine Lagergutverteilung optimal ist.

9. System nach einem der Ansprüche 1 bis 8, wobei der Materialflussrechner (MFR) ferner eingerichtet ist, die Transportaufträge zumindest für die Regalbediengeräte (22) wegoptimiert zu planen.

10. System nach einem der Ansprüche 1 bis 9, wobei jeder der Transportaufträge durch folgende Lagergut-spezifische Parameter definiert ist:
eine Auswahl eines der Regalplätze (R);
eine Auswahl eines der Regalbediengeräte (22), das das entsprechende Lagergut in den ausgewählten Regalplatz (R) ein- oder auslagert;
eine Auswahl eines der Vertikalförderer (20);
eine Auswahl einer Start/Zielstelle; und
eine Auswahl eines der Fahrwege (40), die den ausgewählten Vertikalförderer (20) über zusammenhängende Segmenten (46) mit der ausgewählten Start/Zielstelle verbindet.

11. System nach einem der Ansprüche 1 bis 10, wobei die Grundfläche (26) die Regale (16) und die Regalgassen (18) der Regalanordnung (14) im Wesentlichen vollständig einschließt.

12. System nach einem der Ansprüche 1 bis 11, wobei die Fördermittel-Ebene (24) eine Vielzahl von Fördertechnik-Modulen aufweist, die die Segmente (46) als Strecken und die die Wegpunkte (44) als Kreuzungen oder Verzweigungen implementieren.

13. System nach einem der Ansprüche 1 bis 12, wobei die Topologie (60) ferner Ortsangaben zu den Vertikalförderern (20) und zu anderen Fahrhindernissen (48) in der Grundfläche (26) aufweist.

## Claims

1. Storage and order-picking system (10) for storing and retrieving a plurality of storage goods, wherein the storage goods are supposed to arrive, during sequenced retrieval, in a desired sequence at a target location or wherein the storage goods are distributed into racks during storage as even as possible, comprising:
a statically arranged rack arrangement (14) comprising a plurality of racks (16), wherein the racks (16) respectively comprise a plurality of rack locations (R) being arranged on top of each other and next to each other, in which rack locations (R) the storage goods are storable and retrievable, wherein the racks (16) define at least one rack aisle (18) between each other;
a plurality of statically arranged vertical conveyors (20), wherein, for linking the rack aisles (18) in terms of material flow, several ones of the vertical conveyors (20) are arranged either laterally adjacent to longitudinal sides of the corresponding racks (16) or within the corresponding racks (16), and wherein the vertical conveyors (20) substantially transport the storage goods vertically;
a plurality of transfer locations (T) which are arranged, for decoupling in terms of material flow, between the vertical conveyors (20) and the storage and retrieval devices (22) in the rack arrangement (14), wherein each of the vertical conveyors (20) has assigned at least one of the transfer locations; and
a plurality of storage and retrieval devices (22) which can travel, preferably substantially only, in the rack aisles (18), preferably in a rail-guided manner, wherein the storage and retrieval devices (22) store and retrieve the storage goods and substantially transport the same horizontally along the rack aisles (18);
wherein the storage and order-picking system is **characterized by**:
a conveying-device plane (24),
which is substantially free of barriers, in particular free of rack locations (R);
which extends horizontally beneath, above, or through the rack arrangement (14);
which is coupled, in terms of conveyance, via the vertical conveyors (20), which reach vertically from the rack arrangement (14) just into the conveying-device plane (24), to the rack arrangement (14), wherein each of the vertical conveyors (20) has assigned at least one handing-over location (Ü) in the conveying-device plane (24);
which comprises a plurality of start/target locations, wherein each of the vertical conveyors (20) is respectively coupleable via several different short travelling paths (40) to each of the start/target locations; and which comprises a base area (26) including a topology (60) of a plurality of way points (44) and segments (46);
which comprises a plurality of autonomous driverless transport vehicles, FTF, (28) travelling along the segments (46) in a guided manner;
and a material-flow computer (MFR) having access to the topology (60) and being configured for generating and outputting storage-good-specific transport orders, which are sequence-weighted and distribution-weighted, in order to transport the storage goods between the rack locations (R) and the start/target locations, wherein the transport orders respectively comprise a travelling path (40), which represents related segments (46), in the conveying-device plane (24), along which travelling path (40) the storage goods are moved in a dedicated manner between the handing-over locations (Ü) and the start/target locations by means of autonomous driverless transport vehicles, FTF, (28), wherein each of the segments (46) connects one of the way points (44) to another one of the way points (44).

2. The system of claim 1, wherein the way points (44) are arranged along a regular grid (62).

3. The system of claim 1 or 2, wherein the material-flow computer MFR is further configured to define each of the segments (46) free of barriers from one of the way points (46) to another one of the way points (46), which is a neighbor of second to x-th grade.

4. The system of any of claims 1 to 3, wherein the plurality of rack locations (R) represents a first control stage, wherein the plurality of storage and retrieval devices (22) represents a second control stage, wherein the plurality of vertical conveyors (20) represents a third control stage, wherein the plurality of possible travelling paths (40) represents a fourth control stage, and wherein the plurality of start/target locations represents a fifth control stage.

5. The system of claim 4, wherein the plurality of transfer locations (T) represents a further control stage.

6. The system of claim 4 or 5, wherein the handing-over locations (Ü) represent a still further control stage.

7. The system of any of claims 4 to 6, wherein each of the control stages represents, for the planning of a retrieval process, a dedicated sequencing stage, and wherein each of the control stages represents, for the planning of a storage process, a dedicated distribution stage.

8. The system of any of claims 4 to 7, wherein the material-flow computer (MFR) is configured to adjust the control stages to each other by weighting such that retrieval performance, or storage-good distribution, is optimal.

9. The system of any of claims 1 to 8, wherein the material-flow computer (MFR) is further configured to plan the transport orders in a path-optimized manner, at least for the storage and retrieval devices (22).

10. The system of any of claims 1 to 9, wherein each of the transport orders is defined by the following storage-good-specific parameters:
selection of one of the storage locations (R);
selection of one of the storage and retrieval devices (22) which store or retrieve the corresponding storage good in or from the selected storage location (R);
selection of one of the vertical conveyors (20);
selection of a start/target location; and
selection of one of the travelling paths (40) connecting the selected vertical conveyor (20) via related segments (46) to the selected start/target location.

11. The system of any of claims 1 to 10, wherein the base area (26) substantially encloses completely the rack (16) and the rack aisle (18) of the rack arrangement (14).

12. The system of any of claims 1 to 11, wherein the conveying-device plane (24) comprises a plurality of conveyor modules implementing the segments (46) in terms of lines and implementing the way points (44) in terms of crossings or branches.

13. The system of any of claims 1 to 12, wherein to topology (60) further comprises location indication with regard to the vertical conveyors (20) and with regard to other travelling obstacles (48) in the base area (26).

## Revendications

1. Système d'entreposage et de préparation de commandes (10) destiné au stockage et au déstockage d'une pluralité de marchandises entreposées, les marchandises entreposées, lors d'un déstockage séquentiel, devant parvenir à un point de destination dans une séquence souhaitée ou les marchandises entreposées étant réparties de manière la plus égale possible dans des rayonnages lors du stockage, comprenant :
un arrangement de rayonnages (14) disposé de manière statique qui possède une pluralité des rayonnages (16), les rayonnages (16) possédant respectivement une pluralité d'emplacements de rayonnage (R) disposés les uns au-dessus des autres et les uns à côté des autres, dans lesquels les marchandises entreposées peuvent être stockées et desquels elles peuvent être déstockées, les rayonnages (16) définissant au moins une travée de rayonnages (18) entre eux ;
une pluralité de convoyeurs verticaux (20) disposés de manière statique, plusieurs des convoyeurs verticaux (20) étant respectivement disposés soit adjacents latéralement au niveau de côtés longitudinaux des rayonnages (16) correspondants ou à l'intérieur des rayonnages (16) correspondants pour un raccordement en technique de manutention des travées de rayonnages (18) et les convoyeurs verticaux (20) transportant les marchandises entreposées sensiblement dans le sens vertical ;
une pluralité de postes de transfert (T) qui sont disposés dans l'arrangement de rayonnages (14) pour une séparation en technique de manutention entre les convoyeurs verticaux (20) et les transstockeurs (22), au moins l'un des postes de transfert (T) étant associé à chacun des convoyeurs verticaux (20) ; et
une pluralité de transstockeurs (22) qui ne peuvent de préférence se déplacer sensiblement que dans les travées de rayonnages (18), de préférence sur rails, les transstockeurs (22) stockant et déstockant les marchandises entreposées et les transportant sensiblement dans le sens horizontal le long des travées de rayonnages (18) ;
le système d'entreposage et de préparation de commandes étant **caractérisé par** :
un plan de moyens de convoyage (24),
lequel est sensiblement dépourvu d'obstacles, notamment dépourvu d'emplacements de rayonnage (R) ;
lequel s'étend horizontalement au-dessous de, au-dessus de ou à travers l'arrangement de rayonnages (14) ;
lequel est accouplé en technique de convoyage à l'arrangement de rayonnages (14) par le biais des convoyeurs verticaux (20) qui s'étendent verticalement depuis l'arrangement de rayonnages (14) jusque dans le plan de moyens de convoyage (24), au moins un poste de transfert (Ü) étant associé à chacun des convoyeurs verticaux (20) dans le plan de moyens de convoyage (24) ;
lequel possède une pluralité de points de départ/destination, chacun des convoyeurs verticaux (20) pouvant être accouplé à chacun des points de départ/destination respectivement par le biais de plusieurs routes (40) courtes différentes, et lequel possède une surface de base (26) qui présente une topologie (60) constituée d'une pluralité de points de cheminement (44) et de segments (46) ;
lequel possède une pluralité de véhicules de transport autonomes sans conducteur, FTF, (28) qui se déplacent de manière guidée le long des segments (46) ;
et un ordinateur de manutention (MFR) qui a accès à la topologie (60) et qui est conçu pour générer et délivrer des ordres de transport spécifiques aux marchandises entreposées, pondérés en séquence ou pondérés en répartition afin de transporter les marchandises entreposées entre les emplacements de rayonnage (R) et les points de départ/destination, les ordres de transport possédant respectivement une route (40), qui représente des segments (46) connexes, dans le plan de moyens de convoyage (24), le long de laquelle les marchandises entreposées sont déplacées avec une affectation fixe entre les postes de transfert (Ü) et les points de départ/destination au moyen de véhicules de transport autonomes sans conducteur, FTF, (28), chacun des segments (46) reliant l'un des points de cheminement (44) avec un autre des points de cheminement (44).

2. Système selon la revendication 1, les points de cheminement (44) étant disposés le long d'une grille (62) régulière.

3. Système selon la revendication 1 ou 2, l'ordinateur de manutention (MFR) étant en outre conçu pour définir chacun des segments (46) sans obstacle de l'un des points de cheminement (44) vers un autre des points de cheminement (44) qui est un voisin du deuxième au x-ième degré.

4. Système selon l'une des revendications 1 à 3, la pluralité des emplacements de rayonnage (R) représentant un premier niveau de régulation, la pluralité des transstockeurs (22) représentant un deuxième niveau de régulation, la pluralité de convoyeurs verticaux (20) représentant un troisième niveau de régulation, la pluralité de routes (40) possibles représentant un quatrième niveau de régulation et la pluralité de points de départ/destination représentant un cinquième niveau de régulation.

5. Système selon la revendication 4, la pluralité de postes de transfert (T) représentant un niveau de régulation supplémentaire.

6. Système selon la revendication 4 ou 5, les postes de transfert (Ü) représentant encore des niveaux de régulation supplémentaires.

7. Système selon l'une des revendications 4 à 6, chacun des niveaux de régulation représentant un niveau de séquençage propre pour la planification d'un processus de déstockage et chacun des niveaux de régulation représentant un niveau de répartition propre pour la planification d'un processus de stockage.

8. Système selon l'une des revendications 4 à 7, l'ordinateur de manutention (MFR) étant conçu pour accorder les niveaux de régulation les uns aux autres par pondération de telle sorte qu'une puissance de déstockage ou une répartition des marchandises entreposées soit optimale.

9. Système selon l'une des revendications 1 à 8, l'ordinateur de manutention (MFR) étant en outre conçu pour planifier les ordres de transport avec optimisation des routes au moins pour les transstockeurs (22).

10. Système selon l'une des revendications 1 à 9, chacun des ordres de transport étant défini par les paramètres suivants, spécifiques aux marchandises entreposées :
une sélection de l'un des emplacements de rayonnage (R) ;
une sélection de l'un des transstockeurs (22) qui stocke ou déstocke la marchandise entreposée correspondante dans l'emplacement de rayonnage (R) sélectionné ;
une sélection de l'un des convoyeurs verticaux (20) ;
une sélection d'un point de départ/destination ; et
une sélection de l'une des routes (40) qui relient le convoyeur vertical (20) sélectionné au point de départ/destination sélectionné par le biais de segments (46) connexes.

11. Système selon l'une des revendications 1 à 10, la surface de base (26) englobant sensiblement entièrement les rayonnages (16) et les travées de rayonnages (18) de l'arrangement de rayonnages (14).

12. Système selon l'une des revendications 1 à 11, le plan de moyens de convoyage (24) possédant une pluralité de modules techniques de convoyage qui mettent en oeuvre les segments (46) sous la forme de trajets et les points de cheminement (44) sous la forme d'intersections ou de bifurcations.

13. Système selon l'une des revendications 1 à 12, la topologie (60) possédant en outre des indications de lieu à propos des convoyeurs verticaux (20) et à propos d'autres obstacles au déplacement (48) dans la surface de base (26).
